# EUROPEAN PATENT SPECIFICATION

(11) **EP 2 013 448 B1**
(45) Date of publication and mention of the grant of the patent: **20.01.2010**
(21) Application number: 07732360.8
(22) Date of filing: 10.04.2007
(51) Int. Cl.: F01B 13/06, F02B 57/10

(54) **ENGINES**
MOTOREN
MOTEURS

(30) Priority: 29.04.2006 GB 0608578
(43) Date of publication of application: 14.01.2009
(73) Proprietor: Autoairdrives Ltd., Lickey End Bromsgrove Worcestershire B60 1DE (GB)
(72) Inventor: BLUNT, Roderick, Worcestershire B60 1DE (GB)
(74) Representative: Serjeants
(86) International application number: PCT/GB2007/001316
(87) International publication number: WO 2007/125271

(56) References cited:
- DE-B- 1 146 698
- DE-C- 321 135
- FR-A- 520 351
- US-A- 4 072 445
- US-A- 4 966 000

## Description

### Technical Field

The present invention relates to engines and in particular to engines that are suitable for use in motor vehicles and that have improved efficiency.

### Summary of the Invention

The present invention provides an engine comprising a rotary hub having an opening defining a combustion chamber, a bounce piston chamber whose volume varies between a maximum and a minimum with the rotation of the rotary hub, and a bounce piston being a free-floating piston having a first end that defines a part of the combustion chamber and a second end that defines a part of the bounce piston chamber and that is slidably received in the opening between the combustion chamber and the bounce piston chamber, wherein the rotary hub is eccentrically mounted within an outer housing having a substantially cylindrical inner surface and where the bounce piston chamber is defined between a pair of vanes that extend from the rotary hub into sliding contact with the inner surface of the outer housing.

As used herein, the term "bounce piston" refers to a free-floating piston having a first end that defines a part of the combustion chamber and a second end that defines a part of the bounce piston chamber. The bounce piston is capable of sliding within the opening in the rotary hub under the sole urging force of the pressure of gas within the bounce piston chamber and the combustion chamber. In other words, the movement of the bounce piston is not controlled by a mechanical mover such as a connecting rod. An increase in the pressure within the bounce piston chamber (during a compression phase of the engine, for example) will cause the bounce piston to move in a first direction to reduce the volume of the combustion chamber and compress the combustion gas within it. An increase in the pressure within the combustion chamber (during a combustion phase of the engine, for example) will cause the bounce piston to move in a second direction, opposite to the first direction, to reduce the volume of the bounce piston chamber and compress the gas within it to force the rotation of the rotary hub.

FR 520351 discloses a heat engine having a free-floating piston 4 that slides within a cylinder 1 that is closed at both ends by a plate 2, 3. The cylinder 1 is mounted to a shaft 5 that is supported on supports 6, 7, 8 and which is connected to drive an auxiliary motor by a suitable transmission. A combustion chamber 11 is provided between one end of the piston 4 and the plate 2 and a piston chamber 12 that is filled with a mixture of gases is provided between the other end of the piston and the plate 3. Combustion within the combustion chamber 11 causes the piston 4 to move towards the plate 3 and compresses the gases within the piston chamber 12. Movement of the piston 4 within the cylinder 1 causes rotation of the cylinder - shaft system.

The bounce piston provides a gas-tight seal between the combustion chamber and the bounce piston chamber and acts as a thermal barrier to shield the bounce piston chamber from the high temperatures that are experienced within the combustion chamber during the combustion phase. The sliding movement of the bounce piston during the rotation of the rotary hub is used to regulate the purging of combustion products from the combustion chamber and draws air into the engine from the atmosphere.

The first end of the bounce piston can be engineered to conform to a desired overall shape and configuration of the combustion chamber.

As used herein, the term "expansion phase" refers to the operating phase of the engine in which the volume of the bounce piston chamber is gradually increasing from the minimum and the term "compression phase" refers to the operating phase of the engine in which the volume of the combustion chamber is gradually decreasing to compress the gas in the combustion chamber. The transition from the compression phase to the expansion phase will usually be triggered by the combustion phase of the engine when the ignition of fuel in the combustion chamber forces the bounce piston radially outwardly. This movement of the bounce piston will normally mean that the volume of the bounce piston chamber suddenly varies from a maximum to a minimum. It will also normally mean that the volume of the combustion chamber suddenly varies from a minimum to a maximum. The transition from the expansion phase to the compression phase will usually be triggered by the start of the radially inwardly movement of the bounce piston. This radially inwardly movement of the bounce piston may sometimes result in an increase in the volume of the bounce piston chamber that is greater than any reduction caused by the eccentric mounting of the rotary hub within the outer housing. In other words, the volume of the bounce piston chamber may sometimes continue to increase even after the compression phase has started. For this reason it will be readily appreciated that the variation in the volume of the bounce piston chamber between its maximum and minimum over a complete rotation of the rotary hub may be relatively complex.

The vanes are preferably slidably received in slots formed in the rotary hub and biased into sliding contact with the inner surface of the housing.

The bounce piston is preferably a stepped bounce piston having a ring part and a skirt part of larger diameter. The ring part and skirt part both preferably have a cylindrical outer surface. The interior of the bounce piston may be hollow to defme a lubrication gas reservoir in fluid communication with the bounce piston chamber through a non-return valve. Gas in the bounce piston chamber can flow into the lubrication gas reservoir during operation of the engine and the bounce piston is preferably provided with a series of channels or passages that distribute the gas in the lubrication gas reservoir to gas bearing structures provided on an outer surface of the bounce piston.

The ring part of the bounce piston is preferably slidably received in a part of the opening having an inner diameter corresponding substantially with the outer diameter of the ring part. The skirt part is preferably slidably received in a part of the opening having an inner diameter corresponding substantially with the outer diameter of the skirt part to defme an annular chamber between the bounce piston and an inner surface or surfaces of the opening.

The engine preferably includes an inlet passage through which gas from the atmosphere can be supplied to the annular chamber at a predetermined instance during rotation of the rotary hub. The gas is preferably filtered before it is supplied to the annular channel to remove any undesirable particulate matter. In practice, the gas can be drawn into the annular chamber through the inlet passage by the sliding movement of the bounce piston during an expansion phase. This sliding movement causes the volume of the annular chamber to increase and the resulting drop in pressure within the annular chamber draws the gas through the inlet passage.

During normal operation of the engine, the bounce piston preferably slides in the opening between a radially outward position (most preferably where a radially outer surface of the skirt part is aligned with a radially outer surface of the rotary hub) and a radially inward position. More particularly, the bounce piston is forced to slide away from the centre of the rotary hub towards the radially outward position by the combustion of fuel in the combustion chamber. Further movement away from the centre of the rotary hub is preferably prevented by some mechanical means or by contact between the bounce piston and an adjacent part of the rotary housing, for example. The bounce piston is then forced to slide towards the centre of the rotary hub during a compression phase with the decrease in the volume of the bounce piston chamber caused by the eccentric mounting of the rotary hub within the outer housing being at least partially offset by the sliding movement of the bounce piston within the associated opening. During an expansion phase as the volume of the bounce piston chamber increases, residual pressure in the bounce piston chamber could force the bounce piston to slide towards the centre of the rotary hub. It is therefore preferred that, once the bounce piston has reached the radially outward position, it is held there during the rest of the expansion phase. Release of the bounce piston may trigger the start of the compression phase. Although the bounce piston can be locked in the radially outward position using mechanical means, it is preferred that this is achieved by introducing gas from a secondary gas reservoir into the annular chamber.

The engine preferably includes a secondary gas reservoir for storing gas. The secondary gas reservoir is preferably located in the rotary hub but can also be located in the outer housing or even externally of the engine. An inlet passage is preferably provided through which gas from the secondary gas reservoir can be supplied to the annular chamber at a predetermined instance during the rotation of the rotary hub.

The timing of the introduction of gas from the secondary gas reservoir to the annular chamber can be determined by appropriate phasing between ports provided on the outer housing and the rotary hub or by the selective opening and closing of a non-return valve under the operation of a control unit, for example.

The bounce piston must be able to slide during the compression phase to compress the gas in the combustion chamber. The engine, therefore, preferably further includes an outlet passage through which gas from the annular chamber can be transferred to the secondary gas reservoir at a predetermined instance during rotation of the rotary hub. The timing of the transfer of gas from the annular chamber back to the secondary gas reservoir can be determined by appropriate phasing between ports provided on the outer housing and the rotary hub or by the selective opening and closing of a non-return valve under the operation of a control unit, for example. Once the annular chamber has been placed in fluid communication with the secondary gas reservoir by means of the outlet passage, the bounce piston is effectively unlocked or released and can slide as the pressure in the bounce piston chamber increases during the compression phase. The sliding movement of the bounce piston causes the volume of the annular chamber to decrease and the gas in the annular chamber will be gradually returned to the secondary gas reservoir where it is stored.

The engine preferably includes an inlet passage through which gas from the secondary gas reservoir can be supplied to the combustion chamber at a predetermined instance during rotation of the rotary hub. An outlet passage is preferably further included through which combustion products in the combustion chamber can be exhausted at a predetermined instance during rotation of the rotary hub. The timing of the supply of gas from the secondary gas reservoir to the combustion chamber and the (preferably simultaneous) timing of the exhaustion of the combustion products can be determined by appropriate phasing between ports provided on the outer housing and the rotary hub or by the selective opening and closing of a non-return valve under the operation of a control unit, for example. The supply of gas to the combustion chamber preferably takes place on, or before, the start of the compression phase.

The engine preferably includes a primary inlet port through which compressed gas can be supplied to the bounce piston chamber at a predetermined instance during the rotation of the rotary hub. The gas is preferably supplied just prior to the ignition of the fuel in the combustion chamber. The primary inlet port may be located in the outer housing and may include a non-return valve.

The engine preferably further includes a primary outlet port through which gas can be transferred from the bounce piston chamber at a predetermined instance during the rotation of the rotary hub. The gas is preferably transferred when the gas inside the combustion chamber has almost reached maximum compression. The primary inlet port may be located in the outer housing and may include a non-return valve.

The primary outlet port and the primary inlet port are preferably connected by a gas injection loop. The gas injection loop is preferably a closed loop and includes a cooling unit (heat-exchanger), a primary gas reservoir, a control valve and a heating unit (heat-exchanger). The heating unit is preferably used to recover high-grade heat from the exhaust gases produced by the engine during combustion and raise the temperature of the gas (and hence its expansive properties) before it is supplied to the bounce piston chamber though the primary inlet port. Before entering the heating unit, the gas can also be ducted through the wall of the combustion chamber and the cylinder head to recover any low-grade waste heat. The cooling and heating units can be formed as part of the engine housing or as separate external components.

The engine may further include a secondary inlet port through which gas from the atmosphere can be drawn into the bounce piston chamber at a predetermined instance during the rotation of the rotary hub. The gas is preferably drawn through the secondary inlet port into the bounce piston chamber during an expansion phase when the volume of the bounce piston chamber is increasing with a resulting reduction in the pressure within the bounce piston chamber. The secondary inlet port may be located in the outer housing and may include a non-return valve. The gas is preferably filtered to remove undesirable particulate matter and dried to prevent any moisture from entering the gas injection loop. Gas will only be drawn into the bounce piston chamber in the case where the associated bounce piston is deactivated (and preferably held in a fixed position) as described in more detail below. If the bounce piston is active then gas will have been injected into the bounce piston chamber through the primary inlet port at an earlier stage in the rotation cycle and the pressure within the bounce piston chamber will be too high for gas to be drawn into the bounce piston chamber from the atmosphere. However, if the bounce piston is inactive (and preferably held in a fixed position during a complete rotation of the rotary hub) then the injection of gas into the bounce piston chamber does not take place and the pressure within the bounce piston chamber is sufficiently low for the reduction caused by the increasing volume of the bounce piston chamber during the expansion phase to draw in gas through the secondary inlet port.

The secondary inlet port can be selectively opened or closed under the operation of a control unit, for example. This is useful if the primary gas reservoir is operating at maximum capacity because the secondary inlet port can be closed to prevent any gas being drawn into the bounce piston chamber.

The rotary hub is preferably mounted on gas-lubricated bearings. As mentioned above, gas bearing structures can also be provided on an outer surface of the bounce piston.

The engine preferably further includes a fuel injector for injecting fuel into the combustion chamber at a predetermined instance during the rotation of the rotary hub. In a direct injection arrangement where injection of the fuel into compressed combustion gas causes instantaneous ignition, or a homogeneous-charge combustion ignition arrangement where injection of the fuel into compressed combustion gas is ignited by the combustion products of a previous combustion cycle, the fuel is preferably injected when the gas in the combustion chamber is at, or very close to, maximum compression. In a pre-mix arrangement, where the fuel is mixed with the combustion gas before being ignited using a spark plug or similar, then ignition is preferably timed to take place when the mixture of fuel and combustion gas in the combustion chamber is at, or very close to, maximum compression. The fuel may be supplied to the fuel injector by a fuel distributor. The fuel supply, injection and ignition may be carried out in accordance with instructions from a control unit.

Although the engine may include just a single bounce piston, it is generally preferred that the rotary hub includes a plurality of openings, each opening defining a combustion chamber; a bounce piston chamber associated with each opening whose volume varies between a maximum and a minimum with the rotation of the rotary hub; and a bounce piston slidably received in each opening between the associated combustion chamber and the associated bounce piston chamber.

The present invention provides a method of running an engine as described above, the method comprising the steps of: introducing an amount of compressed gas into the bounce piston chamber; compressing the gas in the bounce piston chamber during a compression phase as the bounce piston slides in the opening to decrease the volume of the combustion chamber; and carrying out a combustion phase that forces the bounce piston to slide in the opening to compress the gas in the bounce piston chamber and force the rotation of the rotary hub.

In a direct injection or homogeneous-charge combustion ignition arrangement, gas held within the combustion chamber is compressed as the volume of the combustion chamber decreases during the compression phase. Fuel injected into the combustion chamber during the combustion phase is then ignited instantaneously by the compressed combustion gas or by the combustion products of the previous combustion cycle, respectively. In a pre-mix arrangement, a mixture of combustion gas and fuel is held within the combustion chamber and compressed as the volume of the combustion chamber decreases during the compression phase. The compressed pre-mixture is then ignited during the combustion phase using a spark plug or similar.

The method preferably further includes the step of allowing the gas in the bounce piston chamber to expand during an expansion phase as the volume increases. The bounce piston is preferably locked in a fixed position during at least a part of the expansion phase (most preferably when it has reached the radially outward position mentioned above) and released at the start of the compression phase so that it can slide in the opening. In the case where the engine further includes an annular chamber between the bounce piston and the rotary hub, the method preferably further includes the step of retaining an amount of gas in the annular chamber during at least part of the expansion phase to lock the bounce piston in a fixed position. The method preferably also includes the step of allowing the amount of gas in the annular chamber to leave the annular chamber at the start of (and during) the compression phase to release the bounce piston and allow it to slide.

At least a part of the amount of gas retained in the annular chamber during the expansion phase can be drawn into the annular volume from the atmosphere by the sliding movement of the bounce piston during the combustion phase that increases the volume of the annular chamber. At least a part of the amount of gas retained in the annular chamber can be supplied from a secondary gas reservoir. The amount of gas in the annular chamber that is allowed to leave the annular chamber at the start of (and during) the compression phase to release the bounce piston is preferably transferred to the secondary gas reservoir.

Gas from the secondary gas reservoir is preferably introduced into the combustion chamber to act as combustion gas during the combustion phase. Gas from the secondary gas reservoir is preferably also supplied to the combustion chamber to purge the combustion chamber of combustion products prior to the gas in the combustion chamber being compressed.

The method preferably further comprises the step of drawing gas into the bounce piston chamber from the atmosphere during an expansion phase as the volume of the bounce piston chamber increases. The gas from the atmosphere is preferably dried and filtered.

At least a part of the gas introduced to the bounce piston chamber is preferably transferred during the compression phase and stored in a primary gas reservoir. The transferred gas is preferably cooled before it is stored in the primary gas reservoir.

The gas introduced to the bounce piston chamber is preferably supplied from the primary gas reservoir and is preferably heated before it is introduced to the bounce piston chamber to provide the gas with increased expansive properties.

The amount of gas that is introduced to the bounce piston chamber from the primary gas reservoir is determined by a control valve. The control valve can be operated to introduce a predetermined amount of gas to the bounce piston chamber from the primary gas reservoir where it is allowed to commence expansion before carrying out the combustion phase to force the bounce piston to slide in the opening to further compress the gas in the bounce piston chamber and force the rotation of the rotary hub.

A method of operating an engine as described above may include the step of introducing a continuous or semi-continuous stream of compressed gas into the bounce piston chamber to kinetically force the rotation of the rotary hub. The engine can rely entirely on the use of compressed gas to rotate the rotary hub during a start-up mode or for city driving. In the latter case, the compressed gas is preferably supplied from a separate high-pressure gas reservoir that can be externally mounted and charged overnight using an external compressor, for example. The compressed gas from the high-pressure gas reservoir can be passed through a control valve (and optionally a reduction valve) before being introduced directly into the bounce piston chamber through the primary inlet port. However, it is generally preferred that the compressed gas from the high-pressure gas reservoir is supplied through a reduction value to the primary gas reservoir before being passed through a control valve, optionally heated and introduced into the bounce piston chamber through the primary inlet port in the manner described above. Compressed gas from the high-pressure gas reservoir or the primary gas reservoir can also be used to provide additional output power during normal operation of the engine that relies on combustion of fuel in the combustion chamber to force the rotation of the rotary hub.

In the case where the rotary hub includes a plurality of openings, each opening defining a combustion chamber, a bounce piston chamber associated with each opening whose volume varies between a maximum and a minimum with the rotation of the rotary hub, and a bounce piston slidably received in each opening between the associated combustion chamber and the associated bounce piston chamber, a method of running an engine may include the step of deactivating one or more of the bounce pistons. Once a bounce piston is deactivated then no compressed gas is introduced into the associated bounce piston chamber and fuel injection/combustion does not take place.

The method may include the step of locking one or more of the deactivated bounce pistons in a fixed position during a complete rotation of the rotary hub. The bounce pistons can preferably slide in their associated opening between a radially outward position and a radially inward position and the one or more bounce pistons are preferably locked in a fixed position at the radially outward position during the complete rotation of the rotary hub. The method preferably further includes the step of releasing one or more of the bounce pistons from the fixed position so that they are free to slide in their associated opening.

The one or more of the deactivated bounce pistons can also be allowed to slide freely. This has the potential advantage that the bounce pistons do not provide a braking effect on the rotating of the rotary hub since the decrease in the volume of the bounce piston chamber caused by the eccentric mounting of the rotary hub within the outer housing can be at least partially offset by the sliding movement of the bounce pistons.

The number of bounce pistons that are deactivated is preferably determined with reference to an operating condition of the engine. The operating condition may be a desired output power of the engine. For example, when desired output power is low then just one of the bounce pistons can be active with the remaining bounce pistons being deactivated. As the desired output power increases then first two, then three, four etc. bounce pistons can be activated such that compressed gas is introduced into the associated bounce piston chambers and fuel injection/combustion is restored

### Drawings

Figure 1 is a schematic axial cross section view of a radial air drive engine according to the present invention;
Figure 2A is schematic radial cross section view along the line 1-1 of Figure 1;
Figure 2B is schematic radial cross section view along the line 2-2 of Figure 1;
Figure 3 is a schematic detail view showing some of the air lubrication features of the engine of Figure 1;
Figure 4 is a schematic view of a direct injection (DI) fuel injection system that can be used with the engine of Figure 1;
Figure 5 is a schematic view of an air injection loop and air management and heat recovery system that forms part of the engine of Figure 1;
Figure 6 is a schematic axial cross section view of the engine of Figure 1 in which the various engine phases (or sectors) have been labelled A to H;
Figure 7 is schematic radial and axial cross section views of engine phase A;
Figure 8 is schematic radial and axial cross section views of engine phase B;
Figure 9 is schematic radial and axial cross section views of engine phase C;
Figure 10 is schematic radial and axial cross section views of engine phases D and E;
Figure 11 is schematic radial and axial cross section views of engine phases F and G; and
Figure 12 is schematic radial and axial cross section views of engine phase H.

### General overview

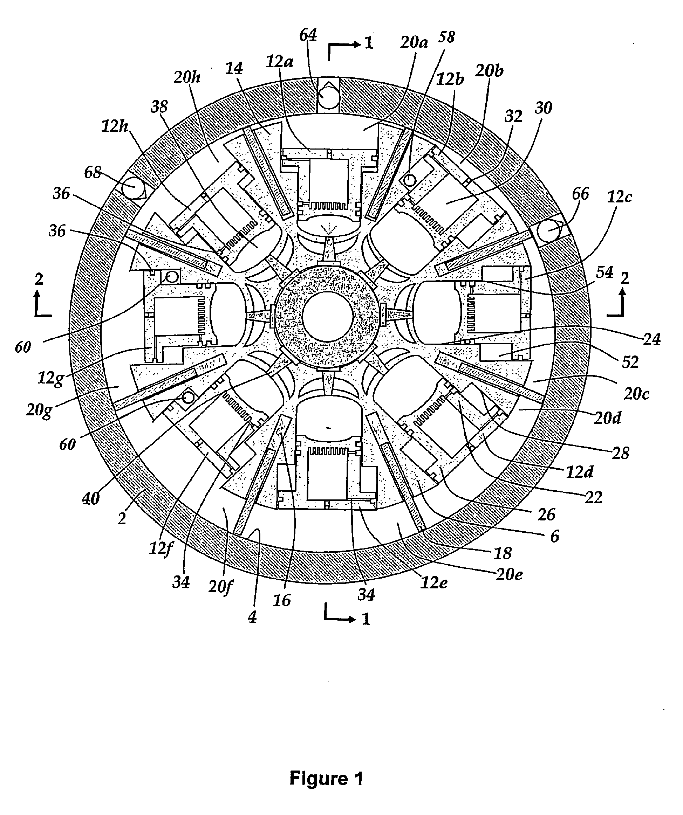

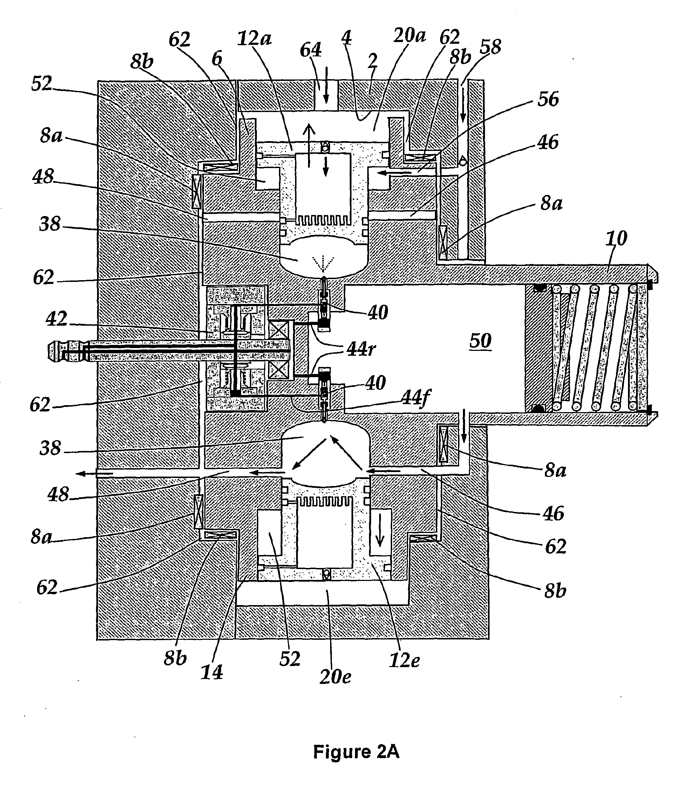

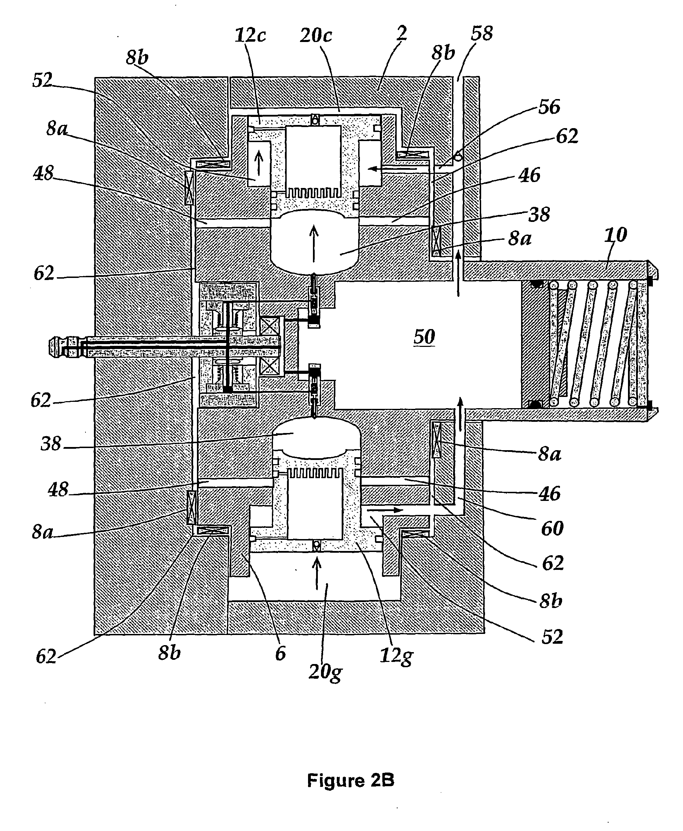

A general overview of the constituent parts of the radial air drive engine will be explained with reference to Figures 1, 2A and 2B. In each case, the flow or movement of air is represented by arrows having solid heads and the movement of component parts of the engine, such as the bounce piston, for example, is represented by arrows having open heads.

The engine includes an outer housing 2 having a cylindrical inner surface 4. A rotary hub 6 is mounted within the housing 2 on air lubricated bearings 8a and 8b and is connected to, or integrally formed with, an output shaft 10 of the engine. The rotary hub 6 is eccentrically mounted such that its axis of rotation is parallel to, but spaced apart from, the centre axis of the inner surface 4.

The rotary hub 6 incorporates eight stepped bounce pistons 12a to 12h that are slidably received in eight stepped openings that extend radially inwardly from a radially outer surface 14 of the hub. The region of the rotary hub 6 between each adjacent pair of openings includes a radially extending slot 16 for receiving a vane 18. The vanes 18 are biased radially outwardly into direct sliding contact with the cylindrical inner surface 4 of the outer housing 2. The region radially outside of the rotary hub and between each adjacent pair of vanes 18 is a bounce piston chamber 20a to 20h.

Each bounce piston 12a to 12h has a stepped construction with a first cylindrical part (or ring 22) that is received in a radially inner cylindrical part 24 of the associated opening and a second cylindrical part (or skirt 26) having a diameter greater than the ring 22 and which is received in a wider radially outer cylindrical part 28 of the associated opening. Each bounce piston 12a to 12h is hollow and is formed with a lubrication air reservoir 30 that is in fluid communication with the associated bounce piston chamber 20a to 20h by a non-return valve 32. Passages 34 extend through the wall of each bounce piston 12a to 12h to provide fluid communication between the lubrication air reservoir 30 and air bearing structures 36 formed on the outer cylindrical surfaces of each bounce piston.

The radially inner part of each opening functions as a combustion chamber 38 and can be shaped and configured to correspond to conventionally accepted and highly-engineered designs. The radial air drive engine can therefore use existing technology which should make its implementation easier and more cost-effective. A fuel injector 40 is associated with each of the combustion chambers 38 and is supplied with fuel from a rotating fuel distributor 42 through fuel supply lines 44f formed in the rotary hub 6. Excess fuel can be returned from each fuel injector 40 to the fuel distributor through a return line 44r. Each bounce piston 12a to 12h effectively separates one of the combustion chambers 38 from the associated bounce piston chamber 20a to 20h defined between adjacent pairs of vanes 18. Each combustion chamber 38 includes an inlet passage 46 that is in intermittent fluid communication with the secondary air reservoir (see below) and an outlet passage 48 that is in intermittent fluid communication with an outlet port for the exhaust of combustion products.

A central region of the rotary hub 6 is hollow and defines a secondary air reservoir 50 for compressively storing air.

An annular chamber 52 is formed between the skirt 26 of each bounce piston 12a to 12h and the stepped shoulder 54 of the associated opening. Each annular chamber 52 includes an inlet passage 56 that is in intermittent fluid communication with the secondary air reservoir 50 and continuous fluid communication with an inlet port 58 through a non-return valve. Each annular chamber 52 also includes an outlet passage 60 that is in intermittent fluid communication with the secondary air chamber 50.

Additional passages 62 are provided through the rotary hub 6 and between the rotary hub and the outer housing 2 to supply air to the various air-lubricated thrust and radial bearings 8a and 8b.

The outer housing 2 includes a primary inlet port 64, a secondary or auxiliary inlet port 66 and a primary outlet port 68. Compressed air is injected sequentially into each of the bounce piston chambers 20a to 20h through the primary inlet port 64 during rotation of the rotary hub 6. The purpose of the secondary inlet port 66 and the primary outlet port 68 are described in more detail below.

### Air lubrication

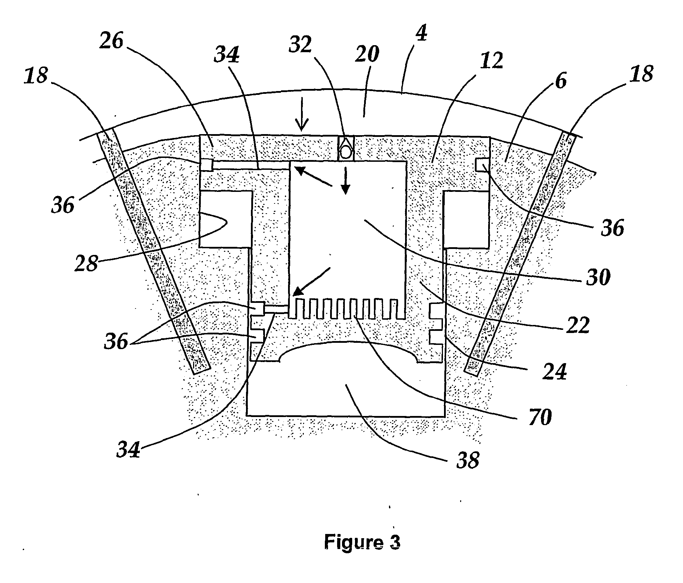

The radial air drive engine incorporates air lubrication at the junction of all stationary and rotating parts. With reference to Figure 3, the outer surface of the bounce pistons 12 includes air bearing structures 36 to provide lubrication between the bounce piston and the inner surface of the associated opening. During operation of the engine a small quantity of air in the bounce piston chamber 20 will bleed through the non-return valve 32 in the base of each bounce piston 12 into the lubrication air reservoir 30. This air is then supplied through narrow passages 34 in the walls of each bounce piston 12 to the air lubrication structures 36. Graphite sealing rings (not shown) are also provided on an outer surface of each bounce piston 12 to provide a fluid-tight seal between the combustion chamber 38 and the annular chamber 52, and also between the annular chamber 52 and the bounce piston chamber 20.

The air inside the air lubrication reservoir 30 is also used to cool the radially inner part (or crown) of the bounce piston by means of internal cooling fins 70.

A series of passages 62 are provided through the rotary hub 6 and between the rotary hub and the outer housing 2 to supply air to the various air-lubricated thrust and radial bearings 8a and 8b. The advantages of using air lubrication include virtually frictionless characteristics, silent operation and the ability to operate at high rates of rotation and high temperatures.

Conventional bearings can be used either instead of, or in addition, to the air-lubricated bearings. For example, the bearings 8c between the rotary hub 6 and the fuel distributor 42 can be conventional fuel-lubricated bearings. Bearings adjacent the transmission support (not shown) can be splash lubricated from the transmission oil. These conventional bearings can provide additional support during start-up when the air-lubricated bearings 8a and 8b are not fully operational.

### Fuel injection

The radial air drive engine can run on any suitable fuel including *inter alia* diesel, bio-diesel (from natural renewable sources such as vegetable oils and rapeseed oils), ethanol (from wheat, corn and other grains) and petrol.

A variety of different modes of fuel injection and ignition can be used. These include direct injection (DI) where the fuel (typically diesel) is injected directly into the combustion chamber and ignited by the combustion air that has been heated and compressed during a compression phase of the engine, (ii) pre-mix where a mixture of fuel and combustion air is supplied to the combustion chamber, compressed during a compression phase of the engine and then ignited by a spark, and (iii) homogeneous-charge combustion ignition (HCCI) where the fuel (typically petrol) is injected directly into combustion chamber and ignited by the hot combustion products of the previous combustion cycle. However, at low speed operation and start-up the fuel must still be ignited by a spark. Both pre-mix and HCCI therefore suffer from the same principal disadvantage, namely the need to provide a spark plug within the rotary hub. This could be achieved using an electrical slip ring, for example.

Another option would be to provide a fuel injection system that combines DI and HCCI components. A first fuel injector could be provided to inject diesel fuel directly into the combustion chamber during low speed operation and start-up. For high speed operation, a second fuel injector could be provided to inject petrol directly into the combustion chamber where it would be ignited by the hot combustion products of the previous combustion cycle. A control unit could be used to switch between the two different modes of operation in response to an input signal indicative of the operating speed of the engine. It would be beneficial to retain the diesel injection to provide diesel bearing support for the engine during start-up before the air-lubricated bearings become fully operational.

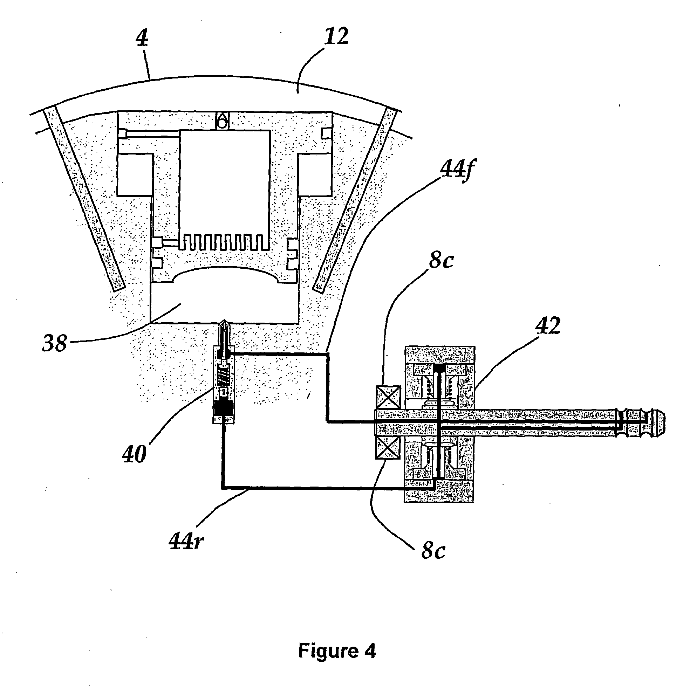

By way of example only, Figure 4 is a schematic of a DI fuel injection system where diesel from a single fuel distributor 42 is supplied to each of the fuel injectors 40 through a feed line 44f. Excess diesel can be returned from each fuel injector to the fuel distributor through a return line 44r. The fuel injectors 40 are operated by a fuel injection control unit (not shown) to inject the required amount of diesel into the combustion chambers 38 of the engine in accordance with a predetermined timing sequence, namely when the air in the combustion chambers is fully compressed. The diesel is automatically ignited by the hot compressed air inside the combustion chambers 38 and the act of combustion forces the bounce pistons 12 away from the centre of the rotary hub 6 and towards the inner surface of the outer housing.

### Engine phases and operation

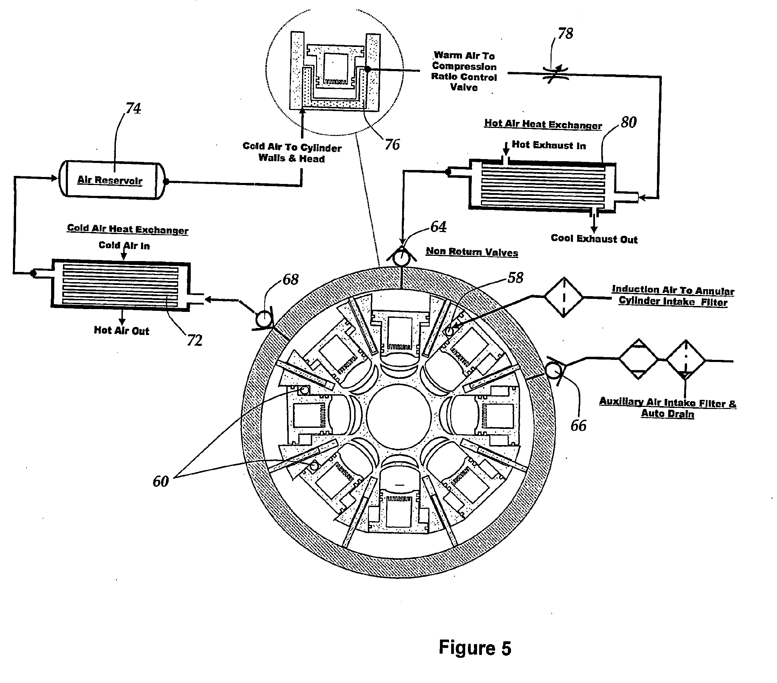

The various engine phases during operation of the radial air drive engine will now be described with reference to Figures 5 to 12

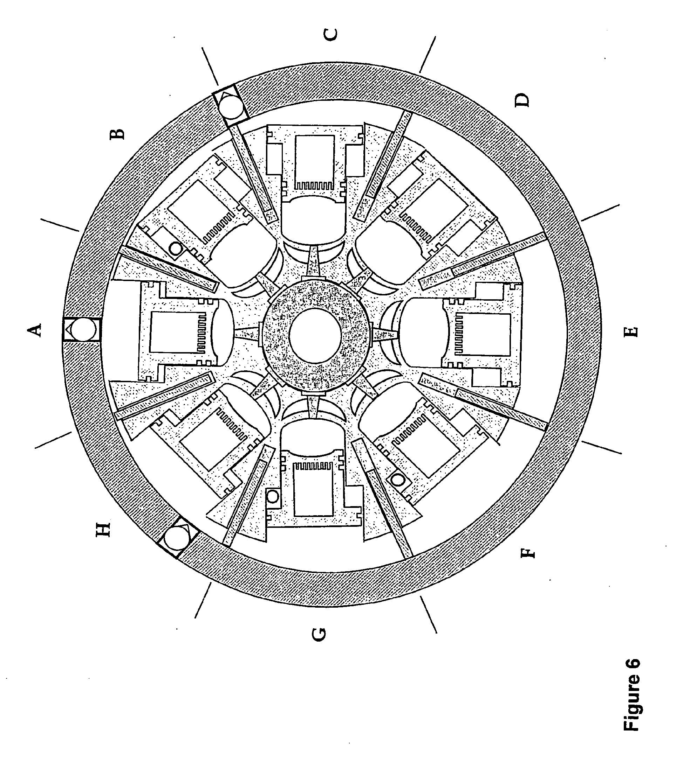

In Figure 6 the engine phases (or sectors) for a single instant in time have been labelled A to H. It will be readily appreciated that each bounce piston and associated bounce piston chamber will transition between the various engine phases A to H as the rotary hub rotates in the clockwise direction during the operation of the engine. In each of Figures 6 to 12, only the various air passages that are applicable for the particular engine phase(s) under discussion are shown. It will be readily appreciated that the pressures and temperatures experienced during the operation of the engine will depend on a number of factors and will be selected to match the operating characteristics and output power requirements of the engine. The values given below are therefore included for the purpose of illustration and should not be considered to be limiting the scope of the invention in any way.

### 1. Engine phase A

At engine phase H, part of the hot compressed air in the bounce piston chamber 20h exits through the primary outlet port 68. With reference to Figure 5 the hot compressed air is cooled by passing it through a heat-exchanger 72 and stored in a primary air reservoir 74. The amount of cooling will depend on a number of different factors including the size and efficiency of the heat-exchanger. However, a storage temperature of <100 °C should be achievable. The air can be stored within the primary air reservoir 74 at a typical pressure of about 100 psi (0.69 GPa). Compressed air at the storage pressure is supplied from the primary air reservoir 74 through passages or cooling galleries 76 provided in the rotary hub adjacent the combustion chamber and through a control valve 78 to a heat-exchanger 80 where it is heated by the waste exhaust gases to a high temperature, typically about 200°C. The pre-heated compressed air is then injected into the bounce piston chamber 20a at engine phase A though the primary inlet port 64. The air injection loop between the primary outlet port 68 and the primary inlet port 64 and the air in the various bounce piston chambers 20a to 20h is a closed loop system and only minor air leaks need to be replenished.

The control valve 78 between the primary air reservoir 74 and the primary inlet port 64 controls the supply of compressed air to the bounce piston chamber 20a. This determines the pressure acting on the base of the bounce pistons 12a to 12h and hence the compression ratio of the engine. The ability to control the compression ratio is important because it permits engine optimisation and allows the engine to use different fuels.

A predetermined amount of compressed air is injected into the bounce piston chamber 20a and then allowed to expand. The injection of compressed air during the normal operation of the engine is therefore an expansive rather than a kinetic process. In other words, the injection of the predetermined amount of compressed air is not intended to cause rotation of the rotary hub 6 by acting kinetically on the vanes 18. However, the control valve 78 can be operated to inject compressed air from the primary air reservoir 74 into the bounce piston chamber 20a to act kinetically on the vanes 18 in certain situations when additional power output is required quickly. For example, if the engine is used to drive a motor vehicle and a sudden burst of speed is needed then the control valve 78 can be opened to inject compressed air from the primary air reservoir 74 into the bounce piston chamber 20a through the primary inlet port 64 and increase the tangential force on the vanes 18. Compressed air from the primary air reservoir 74 is also injected into the bounce piston chamber 20a at the start-up of the engine when at least one complete rotation of the rotary hub 6 is needed to charge the various chambers etc. before combustion of the fuel can take place. The use of compressed air at start-up removes the need for a starter motor and heavy-duty battery.

It is possible for the engine to run entirely using compressed air. This would involve the injection of compressed air from the primary air reservoir 74 as a kinetic process to force the rotation of the rotary hub 6. In this mode of operation, a separate high-pressure air reservoir (not shown) is charged with compressed air (optionally using a separate compressor operated overnight, for example) to a pressure of about 2000 psi (13.8 GPa). The stored compressed air from the high-pressure air reservoir (not shown) is passed through a reduction valve (not shown) and supplied to the primary air reservoir 74. Compressed air from the primary air reservoir 74 at an upper limit of the storage pressure (typically about 100 psi (0.69 GPa)) is then passed through the control valve 78, the heat-exchanger 80 and injected into the bounce piston chamber 20a on a continuous or semi-continuous basis. The main disadvantage to this mode of operation is the need to charge the high-pressure air reservoir, which is not very energy efficient.

In some instances it might be useful to operate the engine as a "hybrid" with fuel being combusted in the combustion chambers for high-power or medium-emission applications and with compressed air being injected kinetically for low-power or low-emission applications, for example.

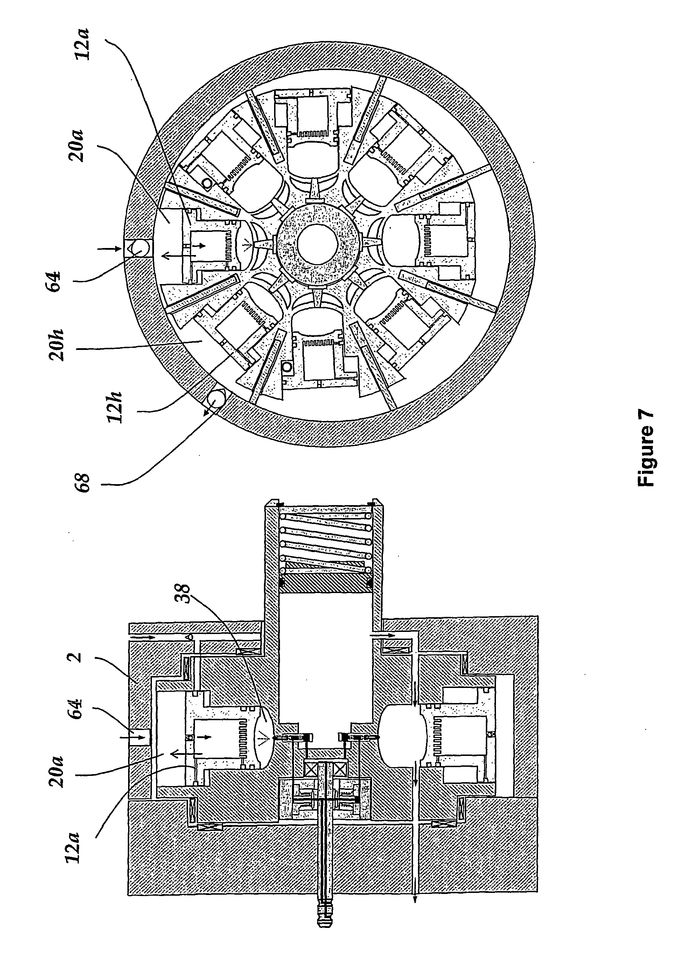

At engine phase A (shown in Figure 7) the bounce piston 12a is located at its most radially inward position (i.e. closest to the centre of the rotary hub 6). With a fully compressed charge of air in the combustion chamber, fuel is injected into the combustion chamber by the fuel injector 40 initiating combustion and forcing the bounce piston 12a away from the centre of the rotary hub 6 towards the inner surface 4 of the outer housing 2. The combustion products remain within the combustion chamber until they are purged at engine phase E. The actual moment of combustion is not shown in Figures 6 and 7 but is more properly represented by a separate engine phase that is referred to below as A-B. The combustion phase (engine phases A-B and B) represents an intermediate phase between the compression phase (engine phases C to E) and the expansion phase (engine phases F to A) described in more detail below.

The pre-heated compressed air in the bounce piston chamber 20a is compressed by the sliding movement of the bounce piston 12a resulting in a rapid rise in the pressure and temperature of the air within the bounce piston chamber. Typical pressure and temperature of the compressed air would be about 300 psi (2.1 MPa) and about 350 °C, respectively. The compressed air exerts pressure equally throughout the bounce piston chamber but since the leading vane has a greater exposed area than the trailing vane as a result of the eccentric mounting of the rotary hub, a greater force is applied to the leading vane. It is this differential in applied force to the vanes 18 and the resultant torque that causes rotation of the rotary hub 6 is the clockwise direction.

### 2. Engine phase B

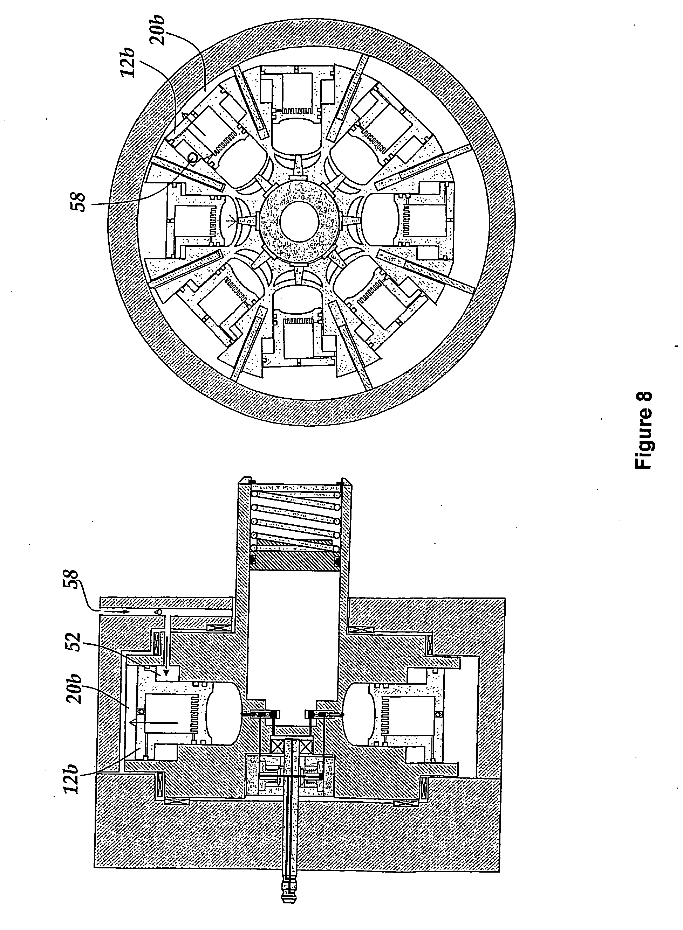

The combustion of the fuel in the combustion chamber 38 at engine phase A-B forces the bounce piston 12b to slide radially outwardly away from the centre of the rotary hub 6 towards the inner surface 4 of the outer housing 2. At engine phase B (shown in Figure 8) the pressure rise in the bounce piston chamber 20b arrests the movement of the bounce piston 12b and gradually brings it to rest with its radially outer surface in line with the outer surface of the rotary hub 6. Contact means such as a circumferential ring (not shown) in the opening can prevent any further movement of the bounce piston 12b away from the centre of the rotary hub 6.

The movement of the bounce piston 12b leads to an increase in the volume of the annular chamber 52 and this creates a negative pressure that is used to draw a fresh volume of filtered air from the atmosphere into the annular chamber through the inlet port 58. This is shown schematically in Figure 5. The outlet passage 60 of the annular chamber 52 is not in fluid communication with the secondary air reservoir 50 during this particular engine phase so the fresh volume of filtered air is retained in the annular chamber.

### 3. Engine phase C

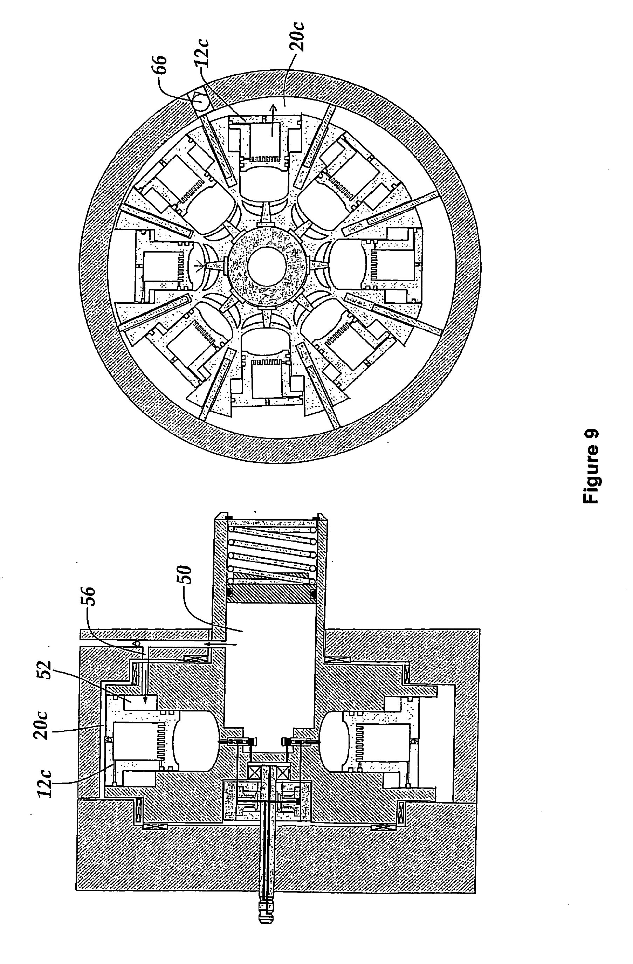

At engine phase C (shown in Figure 9) the bounce piston 12c has reached its radially outward position. The bounce piston 12c is then locked in this position (the so-called sleeper position) by supplying compressed air from the secondary air reservoir 50 into the annular chamber 52. This is achieved by appropriate port phasing between the rotary hub 6 and the outer housing 2 that puts the inlet passage 56 of the annular chamber 52 in fluid communication with the secondary air reservoir 50. The introduction of the compressed air from the secondary air reservoir 50 is essential to hold the bounce piston 12c in its radially outward position during the rest of the expansion phase (engine phases C to E where the volume between the adjacent vanes is gradually still increasing). Even at engine phase E the significant residual pressure (typically 50 to 100 psi (0.34 to 0.69 GPa) in the bounce piston chamber 20e is such that it would be capable of sliding the bounce piston 12e back towards the centre of the rotary hub 6 if it were not locked in the radially outward position by the compressed air in the annular chamber 52.

The air that is compressively stored in the secondary air reservoir 50 is generated during the normal operation of the engine and is returned from the annular chamber 52 of active bounce pistons during the compression phase (engine phases F to A where the volume between the adjacent vanes is gradually decreasing) as the bounce pistons slide towards the centre of the rotary hub. It will be recalled that the air in the annular chamber 52 is originally drawn from the atmosphere through the inlet port 58 as the bounce piston slides 12b away from the centre of the rotary hub 6 towards the inner surface 4 of the outer housing 2 and is supplemented with compressed air from the secondary air reservoir 50.

The air drawn into the annular chambers 52 should substantially match the amount of air that is used for combustion because this removes any requirement for additional air to be drawn into the annular chamber when the secondary air reservoir 50 is low and all of the bounce pistons are active.

The engine is capable of operating with any number of the eight bounce pistons 12a to 12h being active. The number of bounce pistons that are active at any one time will depend on the required power output from the engine. In other words, when low power output is required (for example, when a motor vehicle driven by the engine is travelling at a slow speed) then just a single bounce piston is active and the remaining seven bounce pistons are retained in the sleeper position. In practice, if low output power is required for long periods of time than the active bounce piston(s) may be cycled between all eight of the bounce pistons 12a to 12h in the rotary hub 6 to avoid overheating. As the required output power increases (for example, when a motor vehicle driven by the engine starts to travel at a faster speed) then two, three, four and so on bounce pistons can be released in sequence from the sleeper position and made active. Each individual bounce piston is therefore either deactivated in the sleeper position or active and working at maximum output power and 100% volumetric efficiency. If each combustion chamber runs at increased volumetric efficiency then an output power of about 200 bhp/lit (147 kW/lit) may be achievable because of the variable compression ratio and supercharging. However, a more typical output power might be about 100 bhp/lit (73 kW/lit), which for a 1000 cc engine with eight bounce pistons would require 125 cc per bounce piston (or "cylinder") at 12.5 bhp.

The individual bounce pistons 12a to 12h are preferably activated in a symmetrical manner to keep the rotary hub 6 as evenly balanced as possible. The activation of the bounce pistons 12a to 12h is carried out under the operation of a control unit (not shown) using an input signal that is representative of the required output power of the engine. In the case where the engine is used to drive a motor vehicle, the control unit may receive an input signal that varies in accordance with the amount of actuation of the vehicle's accelerator pedal, for example.

Bounce pistons in the sleeper position are unable to slide towards the centre of the rotary hub 6 against the pressure of the compressed air in the annular chamber 52 and are deliberately denied fuel injection for combustion. This may involve some sort of link between the control unit that is used to control the selection of active bounce pistons and the fuel injection control system. The engine is also controlled to prevent any compressed air from being injected into the bounce piston chamber of a bounce piston that is in the sleeper position.

Fixing one or more of the bounce pistons in the sleeper position has an effect on the supply of air into the annular chambers 52 and the transfer of air between the annular chambers 52 and the secondary air reservoir 50. It is the sliding movement of the bounce pistons away from the centre of the rotary hub 6 that draws in air from the atmosphere into the annular chambers 52, which is then transferred to the secondary air chamber 50 during the compression phase when the bounce pistons slide back towards the centre of the rotary hub. If a bounce piston is in the sleeper position then it will not undergo this sliding movement and the supply of air to the secondary air reservoir 50 can be diminished. This is important because at engine phase E (see below) the air in the secondary air reservoir 50 is used to purge combustion products from the combustion chamber 38. However, because the bounce pistons in the sleeper position are deliberately denied fuel injection for combustion, it is possible to configure the inlet passage 46 associated with each combustion chamber 38 such that air from the secondary air reservoir 50 is only supplied to the combustion chambers of those bounce pistons that are allowed to slide.

There is normally no need to control the communication between the annular chambers 52 and the secondary air reservoir 50 to take account of bounce pistons being in the sleeper position. Each annular chamber 52 will be placed in fluid communication with the secondary air reservoir 50 twice during each rotation of the rotary hub 6. For bounce pistons that are held in the sleeper position the pressure within the annular chamber 52 may vary slightly during the rotation but will normally be sufficiently close to the pressure within the secondary air reservoir 50 to balance any transfer of air between the annular chamber 52 and the secondary air reservoir 50 over the rotation cycle of the rotary hub 6. However, it is also possible to configure the inlet and outlet passages 56 and 60 such that air is only supplied between the secondary air reservoir 50 and the annular chambers 52 of those bounce pistons that are allowed to slide.

When one or more of the bounce pistons are not active then any additional air that is generated can be used to replenish the primary air reservoir 74, injected into the bounce piston chamber 20a to kinetically drive the rotation of the rotary hub 6, or the inlet port 58 can be closed to prevent any further air from the atmosphere being drawn in to the annular chambers 52.

In the case where the bounce piston 12c is in the sleeper position and no pre-heated compressed air was injected through the primary inlet port 64 into the associated bounce piston chamber at engine phase A, rotation of the rotary hub 6 with the bounce piston located in the radially outward position will result in a negative pressure in the bounce piston chamber 20c due to the increase in the volume between the adjacent vanes caused by the eccentric mounting of the rotary hub within the outer housing 2. This negative pressure will draw in filtered and dried air from the atmosphere through a non-return valve at the secondary inlet port 66. This is shown schematically in Figure 5. Part of the air in the bounce piston chamber 20c will eventually be transferred into the air injection loop through the primary outlet port 68 and the introduction of auxiliary air through the secondary inlet port 66 is therefore used to replenish any air leakages in the air injection loop. Any auxiliary air over and above that needed to replenish any air leakages will be stored in the primary air reservoir 74. The amount of compressed air in the primary air reservoir 74 will therefore increase gradually during the operation of the engine. The secondary inlet port 66 can be selectively closed in the event that the primary air reservoir 74 is at maximum capacity.

In the case where the bounce piston 12c is active then the pressure of the compressed air within the bounce piston chamber 20c is such that no air will be drawn through the secondary inlet port 66. This means that if the engine is run for long periods of time with all eight bounce pistons 12a to 12h being active then the amount of air in the primary air reservoir will gradually decrease.

### 4. Engine phases D and E

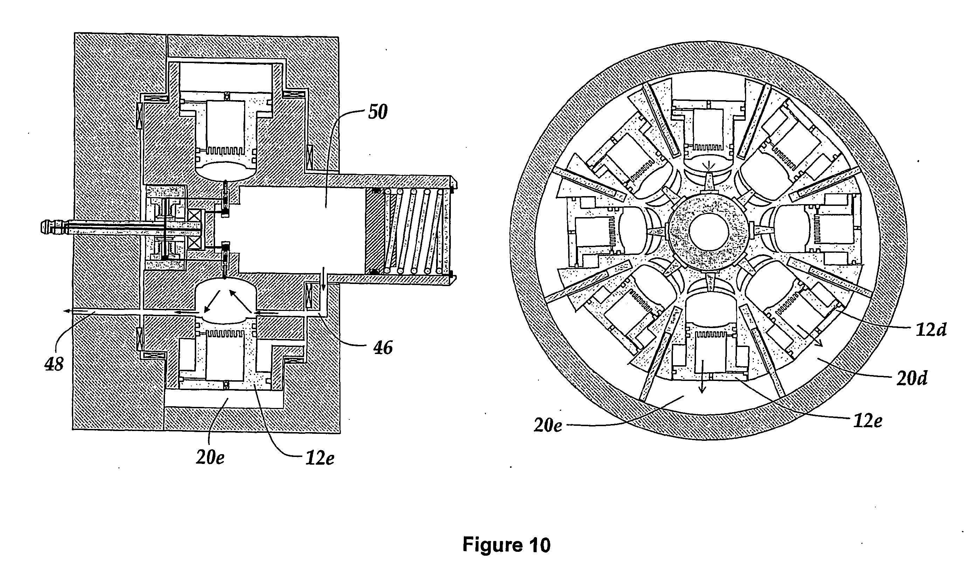

At engine phases D and E (shown in Figure 10) the expansion phase is almost over and the bounce pistons 12d and 12e continue to be held in the radially outwardly position by the compressed air in the annular chamber 52.

At bottom dead centre (engine phase E), inlet and outlet ports in the wall of the outer housing 2 align with corresponding inlet and outlet ports in the rotary hub 6 to allow compressed air from the secondary air reservoir 50 to flow along the inlet passage 46 to purge the combustion chamber 38 of combustion products and replenish the combustion chamber with air. At the same time, the combustion products contained within the combustion chamber 38 are exhausted through the outlet passage 48.

### 5. Engine phases F and G

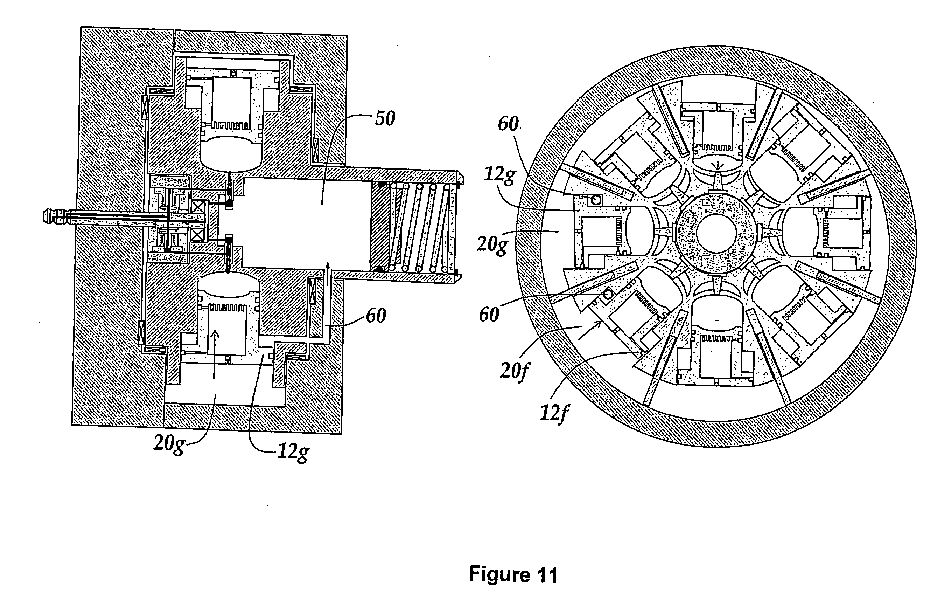

Engines phases F and G (shown in Figure 11) represent the start of the compression phase and the volume of the combustion chamber 38 starts to decrease. During the expansion phase, the compressed air in the bounce piston chambers 20f and 20g will have cooled to about 60 °C and the pressure will have dropped to about 50 psi (0.34 GPa). This is reversed by the start of the compression phase as the eccentric mounting of the rotary hub within the outer housing will eventually lead to a reduction in the volume of the bounce piston chambers 20f and 20g and the pressure and temperature of the compressed air will begin to rise.

If the bounce piston 12f is active then appropriate port phasing at engine phase F between the rotary hub 6 and the outer housing 2 brings the annular chamber 52 into fluid communication with the secondary air reservoir 50 to unlock the bounce piston 12f and allow it to slide. If the bounce piston is not active and is to remain in the sleeper position then the annular chamber 52 will remain sealed off from the secondary air reservoir 50 and any movement of the bounce piston towards the centre of the rotary hub 6 will be prevented. The port phasing can be directly controlled by the control unit mentioned above.

The rise in pressure of the compressed air in the bounce piston chambers 20f and 20g will gradually slide the unlocked and active bounce pistons 12f and 12g towards the centre of the rotary hub 6. The movement of the bounce pistons 12f and 12g gradually forces the compressed air in the annular chamber 52 through the outlet passage 60 to the secondary air reservoir 50 where it is stored.

If the bounce piston is not active then it will not undergo a compression phase in the usual sense because the volume of the combustion chamber will not reduce. In this case, the compression phase may be considered to be a reduction in the volume of the bounce piston chamber arising from the eccentric mounting of the rotary hub 6 within the outer housing 2.

### 6. Engine phase H

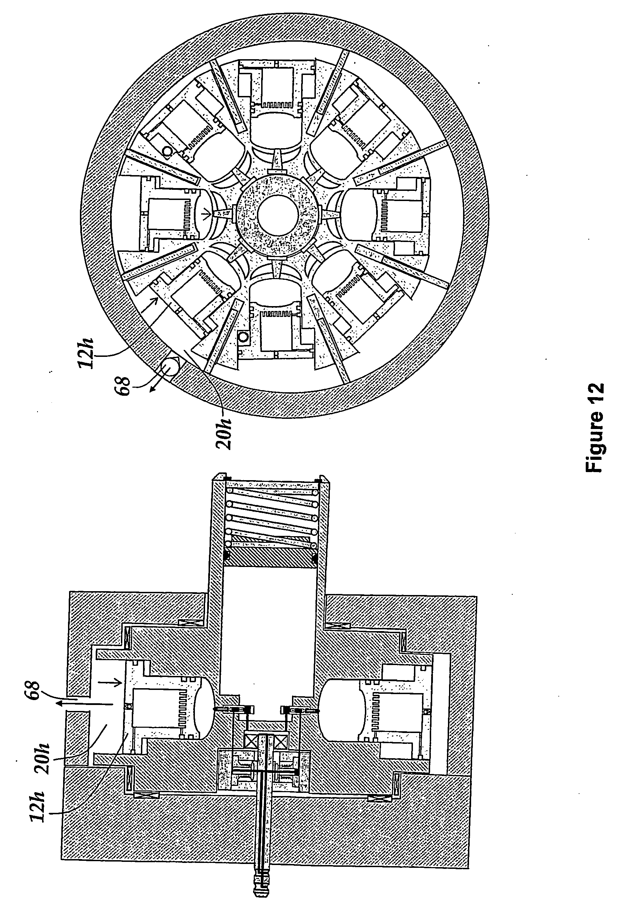

At engine phase H (shown in Figure 12) the bounce piston 12h approaches its radially inward position closest to the centre of the rotary hub 6. Hot compressed air in the bounce piston chamber 20h that is not required for further movement of the bounce piston 12h is transferred to the air injection loop through the primary outlet port 68.

### Technical advantages

The radial air drive engine has several technical and economic advantages over conventional engines. They are summarised below.

Reciprocation of the bounce pistons 12a to 12h is initiated by the compression phase and the combustion phase of the engine and there is no need for a crank shaft or connecting rod. Movement of the bounce pistons 12a to 12h towards the centre of the rotary hub 6 to compress the air in the combustion chambers 38 is forced by the compression of the air in the bounce piston chambers 20a to 20h. This means that the compression cycles of the bounce piston chambers 20a to 20h and the combustion chambers 38 are synchronised during the rotation of the rotary hub 6.

The amount of compressed air that is injected into the bounce piston chamber 20a from the primary air reservoir 74 can be precisely controlled to determine the appropriate compression ratio of the engine and enable a variety of different fuels to be used. The more compressed air that is injected into the bounce piston chamber 20a the greater the force that is applied to each bounce piston during the compression phase and the higher the compression ratio of the air inside the combustion chamber 38 immediately prior to the combustion phase. For maximum efficiency, the amount of compressed air injected into the bounce piston chamber 20a will preferably be chosen to provide a compression ratio that is as high as possible for the particular fuel or fuels to be used.

The way in which the compressed air is injected into the bounce piston chamber 20a can also allow the engine to operate in different modes. For example, the rotary hub 6 can be rotated solely by the injection of a continuous or semi-continuous stream of compressed air acting kinetically on the vanes (during start-up or for city driving), solely by the combustion of fuel in the combustion chamber (so-called normal operation), or, when additional output power is needed for short periods of time, by a combination of the two.

The use of compressed air to force the rotation of the rotary hub 6 on start-up removes the need for a starter motor etc. It also allows the engine to use "stall-start" techniques. This is a feature of most electric "hybrid" motor vehicles that enables the engine to stall when the vehicle comes to a complete but temporary stop and then restart immediately the accelerator pedal is operated.

The compressed air can be pre-heated by engine exhaust gases to harness what would otherwise be redundant energy. Heating the compressed air prior to injecting it into the bounce piston chamber 20a provides additional expansive properties.

The engine provides for regenerative braking where the engine overrun during a period of braking continues to store compressed air in the primary air reservoir 74 for later use.

The compressed air injected into the bounce piston chamber 20a can be supplied from an externally-mounted high-pressure air reservoir that can be charged during the normal operation of the engine or by using an external compressor that offers the possibility of zero-emission operation for city driving (see above).

The compressed air is maintained in a closed loop that consists of the individual bounce piston chambers 20a to 12h and the air injection loop between the primary outlet port 68 and the primary inlet port 64. As such, the compressed air is kept at what is almost constant pressure. This means that an amount of heat must be dissipated to the atmosphere between complete rotations of the rotary hub 6 in order for it to be pre-heated prior to injection into the bounce piston chamber 20a. Although large amounts of compressed air will need to be cooled before being stored in the primary air reservoir 74, providing a closed loop means that only a small amount of filtered and dried air needs to be drawn in through the secondary inlet port 66 with each complete rotation of the rotary hub 6. The compressed air in the air injection loop is preferably used for engine cooling before being injected into the bounce piston chamber 20a.

The charging of the combustion chambers 38 is based on a standard two-stroke scavenge principle where combustion products are purged from the combustion chambers using fresh air supplied originally from the annular chambers 52 between each bounce piston 12a to 12h and the rotary hub 6. A fresh charge of air is drawn into the annular chamber 52 of every active bounce piston from the atmosphere with each rotation of the rotary hub 6.

The use of air lubrication throughout the engine has several benefits including smooth running, reduced pollutants from burnt oil, cheaper maintenance and service costs and less dependency on oil. Air lubrication is only made possible because the engine uses rotary motion and linear bounce piston movement and has clean air available.

Compressed air has the ability to provide maximum torque from a stationary rotary hub position and in certain circumstances its use may remove the need for a transmission or may lead to a simplification of existing transmissions systems.

Overall efficiency will be significantly improved. Fuel consumption and emissions will be significantly reduced.

## Claims

1. An engine comprising:
a rotary hub (6) having an opening defining a combustion chamber (38);
a bounce piston chamber (20a to 20h) whose volume varies between a maximum and a minimum with the rotation of the rotary hub (6); and
a bounce piston (12a to 12h) being a free-floating piston having a first end that defines a part of the combustion chamber (38) and a second end that defines a part of the bounce piston chamber (20a to 20h) and that is slidably received in the opening between the combustion chamber (38) and the bounce piston chamber (20a to 20h);
**CHARACTERISED IN THAT** the rotary hub (6) is eccentrically mounted within an outer housing (2) having a substantially cylindrical inner surface (4) and where the bounce piston chamber (20a to 20h) is defined between a pair of vanes (18) that extend from the rotary hub (6) into sliding contact with the inner surface (4) of the outer housing (2).

2. An engine according to claim 1, wherein the vanes (18) are slidably received in slots (16) formed in the rotary housing (6) and biased into sliding contact with the inner surface (4) of the housing (2).

3. An engine according to any claim 1 or claim 2, wherein the bounce piston (12a to 12h) is a stepped bounce piston having a ring part (22) and a skirt part (26) of larger diameter.

4. An engine according to claim 3, wherein the ring part (22) of the bounce piston (12a to 12h) is slidably received in a part (24) of the opening having an inner diameter corresponding substantially with the outer diameter of the ring part (22).

5. An engine according to claim 3 or claim 4, wherein the skirt part (26) is slidably received in a part (28) of the opening having an inner diameter corresponding substantially with the outer diameter of the skirt part (26) to define an annular chamber (52) between the bounce piston (12a to 12h) and an inner surface or surfaces of the opening.

6. An engine according to claim 5, further comprising an inlet passage (58) through which gas from the atmosphere can be supplied to the annular chamber (52) at a predetermined instance during rotation of the rotary hub (6).

7. An engine according to claim 5 or claim 6, further comprising a secondary gas reservoir (50).

8. An engine according to claim 7, further comprising an inlet passage (56) through which gas from the secondary gas reservoir (50) can be supplied to the annular chamber (52) at a predetermined instance during rotation of the rotary hub (6).

9. An engine according to claim 7 or claim 8, further comprising an outlet passage (60) through which gas from the annular chamber (52) can be transferred to the secondary gas reservoir (50) at a predetermined instance during rotation of the rotary hub (6).

10. An engine according to any of claims 7 to 9, further comprising an inlet passage (46) through which gas from the secondary gas reservoir (50) can be supplied to the combustion chamber (38) at a predetermined instance during rotation of the rotary hub (6).

11. An engine according to any preceding claim, further comprising an outlet passage (48) through which combustion products in the combustion chamber (38) can be exhausted at a predetermined instance during rotation of the rotary hub (6).

12. An engine according to any preceding claim, further comprising a primary inlet port (64) through which compressed gas can be supplied to the bounce piston chamber (20a) at a predetermined instance during the rotation of the rotary hub (6).

13. An engine according to claim 12, wherein the primary inlet port (64) includes a non-return valve.

14. An engine according to claim 12 or claim 13, further comprising a primary outlet port (68) through which gas can be transferred from the bounce piston chamber (20h) at a predetermined instance during the rotation of the rotary hub (6).

15. An engine according to claim 14, wherein the primary outlet port (68) includes a non-return valve.

16. An engine according to claim 14 or claim 15, further comprising a gas injection loop extending between the primary outlet port (68) and the primary inlet port (64).

17. An engine according to claim 16, wherein the gas injection loop includes a cooling unit (72), a primary gas reservoir (74), a control valve (78) and a heating unit (80).

18. An engine according to any preceding claim, further comprising a secondary inlet port (66) through which gas from the atmosphere can be drawn into the bounce piston chamber (20c) at a predetermined instance during the rotation of the rotary hub (6).

19. An engine according to claim 18, wherein the secondary inlet port (66) includes a non-return valve.

20. An engine according to any preceding claim, wherein the rotary hub (6) is mounted on gas-lubricated bearings (8a and 8b).

21. An engine according to any preceding claim, further comprising gas bearing structures (36) on an outer surface of the bounce piston (12a to 12h).

22. An engine according to any preceding claim, further comprising a fuel injector (40) for injecting fuel into the combustion chamber (38) at a predetermined instance during the rotation of the rotary hub (6).

23. An engine according to claim 22, further comprising a fuel distributor (42) for supplying fuel to the fuel injector (40).

24. An engine according to any preceding claim, wherein the rotary hub (6) includes a plurality of openings, each opening defining a combustion chamber (38); a bounce piston chamber (20a to 20h) associated with each opening whose volume varies between a maximum and a minimum with the rotation of the rotary hub (6); and a bounce piston (12a to 12h) slidably received in each opening between the associated combustion chamber (38) and the associated bounce piston chamber (20a to 20h).

25. A method of running an engine according to any preceding claim, the method comprising the steps of:
introducing an amount of compressed gas into the bounce piston chamber;
compressing the gas in the bounce piston chamber during a compression phase as the bounce piston slides in the opening to decrease the volume of the combustion chamber (38); and
carrying out a combustion phase that forces the bounce piston to slide in the opening to compress the gas in the bounce piston chamber and force the rotation of the rotary hub (6).

26. A method according to claim 25, wherein the combustion phase includes the steps of injecting fuel into the combustion chamber (38) and igniting the fuel.

27. A method according to claim 25 or claim 26, further comprising the step of allowing the gas in the bounce piston chamber to expand during an expansion phase as the volume increases.

28. A method according to any of claims 25 to 27, further comprising the step of locking the bounce piston in a fixed position during at least a part of the expansion phase and releasing the bounce piston at the start of the compression phase.

29. A method according to claim 28, wherein the bounce piston can slide in the opening between a radially outward position and a radially inward position and wherein the bounce piston is locked in a fixed position at the radially outward position during the expansion phase and forced to slide to the radially inward position during the compression phase to compress the gas in the combustion chamber (38).

30. A method according to claim 28 or claim 29, further comprising an annular chamber (52) between the bounce piston and the rotary hub (6), and wherein the method further comprises the step of retaining an amount of gas in the annular chamber (52) during at least a part of the expansion phase to lock the bounce piston in a fixed position.

31. A method according to claim 30, further comprising the step of allowing the amount of gas in the annular chamber (52) to leave the annular chamber at the start of the compression phase to release the bounce piston.

32. A method according to claim 30 or claims 31, wherein at least a part of the amount of gas retained in the annular chamber (52) during the expansion phase is drawn into the annular chamber from the atmosphere by the sliding movement of the bounce piston during the combustion phase.

33. A method according to any of claims 30 to 32, wherein at least a part of the amount of gas retained in the annular chamber (52) is supplied from a secondary gas reservoir (50).

34. A method according to claim 33, wherein the amount of gas in the annular chamber (52) that is allowed to leave the annular chamber at the start of the compression phase to unlock the bounce piston is transferred to the secondary gas reservoir (50).

35. A method according to claim 33 or claim 34, wherein gas from the secondary gas reservoir (50) is supplied to the combustion chamber (38) to provide combustion gas for the combustion phase.

36. A method according to any of claims 33 to 35, wherein gas from the secondary gas reservoir (50) is supplied to the combustion chamber (38) to purge the combustion chamber of combustion products prior to the gas in the combustion chamber being compressed.

37. A method according to any of claims 25 to 36, further comprising the step of drawing gas into the bounce piston chamber (20b) from the atmosphere during an expansion phase as the volume of the bounce piston chamber increases.

38. A method according to claim 37, wherein the gas from the atmosphere is dried and filtered.

39. A method according to any of claims 25 to 38, wherein at least a part of the gas introduced to the bounce piston chamber is transferred during the compression phase and stored in a primary gas reservoir (74).

40. A method according to claim 39, wherein the transferred gas is cooled before it is stored in the primary gas reservoir (74).

41. A method according to claim 39 or claim 40, wherein the gas introduced to the bounce piston chamber (20a) is supplied from the primary gas reservoir (74).

42. A method according to claim 41, wherein the gas supplied from the primary gas reservoir (74) is heated before it is introduced to the bounce piston chamber (20a).

43. A method according to claim 41 or claim 42, wherein the amount of gas that is introduced to the bounce piston chamber (20a) from the primary gas reservoir (74) is determined by a control valve (78).

44. A method according to claim 43, further comprising the steps of:
operating the control valve (78) to introduce a predetermined amount of gas to the bounce piston chamber (20a) from the primary gas reservoir (74); and
allowing the predetermined amount of gas to commence expansion before carrying out the combustion phase to force the bounce piston (12a) to slide in the opening to further compress the gas in the bounce piston chamber (20a) and force the rotation of the rotary hub (6).

45. A method of running an engine according to any of claims 1 to 24, the method comprising the step of introducing a continuous or semi-continuous stream of compressed gas into the bounce piston chamber (20a) to kinetically force the rotation of the rotary hub (6).

46. A method of running an engine according to claim 24, the method comprising the step of locking one or more of the bounce pistons (12a to 12h) in a fixed position during a complete rotation of the rotary hub (6).

47. A method according to claim 46, wherein the bounce pistons (12a to 12h) can slide in their associated opening between a radially outward position and a radially inward position and wherein the one or more bounce pistons (12a to 12h) are locked in a fixed position at the radially outward position during the complete rotation of the rotary hub (6).

48. A method according to claim 46 or claim 47, further comprising the step of releasing one or more of the bounce pistons (12a to 12h) from the fixed position so that they are free to slide in their associated opening.

49. A method according to any of claims 46 to 48, wherein the number of bounce pistons (12a to 12h) that are held in a fixed position and the number of bounce pistons that are free to slide in their associated opening are determined with reference to an operating condition of the engine.

## Patentansprüche

1. Maschine, mit
einer Drehnabe (6) mit einer Öffnung, welche eine Brennkammer (38) definiert;
einer Stoßkolbenkammer (20a bis 20h), deren Volumen mit der Drehung der Drehnabe (6) zwischen einem Maximum und einem Minimum variiert; und
einem Stoßkolben (12a bis 12h), welcher ein freischwimmender Kolben mit einem ersten Ende, welches einen Teil der Brennkammer (38) und einem zweiten Ende, welches einen Teil der Stoßkolbenkammer (20a bis 20h) definiert, und welcher in der Öffnung zwischen der Brennkammer (38) und der Stoßkolbenkammer (20a bis 20h) verschiebbar aufgenommen ist;
**dadurch gekennzeichnet, dass** die Drehnabe (6) in einem äußeren Gehäuse (2) mit einer im Wesentlichen zylindrischen inneren Oberfläche (4) exzentrisch montiert ist, wobei die Stoßkolbenkammer (20a bis 20h) zwischen einem Paar von Schiebern (18) definiert ist, welche sich von der Drehnabe (6) in Gleitkontakt mit der inneren Oberfläche (4) des äußeren Gehäuses (2) erstrecken.

2. Maschine nach Anspruch 1, bei der die Schieber (18) in Schlitzen bis (16) gleitend aufgenommen sind, welche in dem Drehgehäuse (6) gebildet sind und mit der inneren Oberfläche (4) des Gehäuses (2) in einen Gleitkontakt vorgespannt sind.

3. Maschine nach Anspruch 1 oder Anspruch 2, bei der der Stoßkolben (12a bis 12h) ein abgestufter Stoßkolben ist, welcher einen Ringteil (22) und einem Schürzenteil (26) mit einem größeren Durchmesser aufweist.

4. Maschine nach Anspruch 3, bei der der Ringteil (22) des Stoßkolbens (12a bis 12h) in einem Teil (24) der Öffnung mit einem inneren Durchmesser, welcher im Wesentlichen mit dem äußeren Durchmesser des Ringteils (22) korrespondiert, gleitend aufgenommen ist.

5. Maschine nach Anspruch 3 oder Anspruch 4, bei der der Schürzenteil (26) in einem Teil (28) der Öffnung mit einem inneren Durchmesser, welcher im Wesentlichen mit dem äußeren Durchmesser des Schürzenteils (26) korrespondiert, gleitend aufgenommen ist, um eine ringförmige Kammer (52) zwischen dem Stoßkolben (12a bis 12h) und einer inneren Oberfläche oder inneren Oberflächen der Öffnung zu definieren.

6. Maschine nach Anspruch 5, mit einem Einlasskanal (58), durch welchen in einem vorbestimmten Moment während der Drehung der Drehnabe (6) Gas aus der Atmosphäre in die ringförmige Kammer (22) geliefert werden kann.

7. Maschine nach Anspruch 5 oder Anspruch 6, mit einem Nebengasspeicher (50).

8. Maschine nach Anspruch 7, mit einem Einlasskanal (56), durch welchen in einem vorbestimmten Moment während der Drehung der Drehnabe (6) Gas aus dem Nebengasspeicher (50) an die ringförmige Kammer (52) geliefert werden kann.

9. Maschine nach Anspruch 7 oder Anspruch 8, mit einem Auslasskanal (60), durch welchen in einem vorbestimmten Moment während der Drehung der Drehnabe (6) Gas aus der ringförmigen Kammer (52) in den Nebengasspeicher (50) überführt werden kann.

10. Maschine nach einem der Ansprüche 7 bis 9, mit einem Einlasskanal (46), durch welchen in einem vorbestimmten Moment während der Drehung der Drehnabe (6) Gas aus dem Nebengasspeicher (50) in die Brennkammer (38) geliefert werden kann.

11. Maschine nach einem der vorhergehenden Ansprüche, mit einem Auslasskanal (48), durch welchen in einem vorbestimmten Moment während der Drehung der Drehnabe (6) Verbrennungsprodukte der Brennkammer (38) ausgestoßen werden können.

12. Maschine nach einem der vorhergehenden Ansprüche, mit einem Haupteinlassanschluss (64), durch welchen in einem vorbestimmten Moment während der Drehung der Drehnabe (6) komprimiertes Gas in die Stoßkolbenkammer (20a) geliefert werden kann.

13. Maschine nach Anspruch 12, bei der der Haupteinlassanschluss (64) ein Rückschlagventil aufweist.

14. Maschine nach Anspruch 12 oder Anspruch 13, mit einem Hauptauslassanschluss (68), durch welchen in einem vorbestimmten Moment während der Drehung der Drehnabe (6) Gas aus der Stoßkolbenkammer (20h) überführt werden kann.

15. Maschine nach Anspruch 14, bei der der Hauptauslassanschluss (68) ein Rückschlagventil aufweist.

16. Maschine nach Anspruch 14 oder Anspruch 15, mit einer Gasinjektionsschleife, welche sich zwischen dem Hauptauslassanschluss (68) und dem Haupteinlassanschluss (64) erstreckt.

17. Maschine nach Anspruch 16, bei der die Gasinjektionsschleife eine Kühleinheit (72), einen Hauptgasspeicher (74), ein Regelventil (78) und eine Heizeinheit (80) aufweist.

18. Maschine nach einem der vorhergehenden Ansprüche, mit einem Nebeneinlassanschluss (66), durch welchen in einem vorbestimmten Moment während der Drehung der Drehnabe (6) Gas aus der Atmosphäre in die Stoßkolbenkammer (20c) gesaugt werden kann.

19. Maschine nach Anspruch 18, bei der der Nebeneinlassanschluss (66) ein Rückschlagventil aufweist.

20. Maschine nach einem der vorhergehenden Ansprüche, bei der die Drehnabe (6) auf mit Gas geschmierten Lagern (8a und 8b) montiert ist.

21. Maschine nach einem der vorhergehenden Ansprüche, mit Gaslagerstrukturen (36) auf einer äußeren Oberfläche des Stoßkolbens (12a bis 12h).

22. Maschine nach einem der vorhergehenden Ansprüche, mit einem Kraftstoffinjektor (40) zum Injizieren von Kraftstoff in die Brennkammer (38) in einem vorbestimmten Moment während der Drehung der Drehnabe (6).

23. Maschine nach Anspruch 22, mit einem Kraftstoffverteiler (42) zum Speisen von Kraftstoff zu dem Kraftstoffinjektor (40).

24. Maschine nach einem der vorhergehenden Ansprüche, bei der die Drehnabe (6) eine Vielzahl von Öffnungen aufweist, wobei jede Öffnung eine Brennkammer (38) definiert; bei der mit jeder Öffnung eine Stoßkolbenkammer (20a bis 20h) assoziiert ist, deren Volumen mit der Drehung der Drehnabe (6) zwischen einem Maximum und einem Minimum variiert; und bei der in jeder Öffnung ein Stoßkolben (12a bis 12h) zwischen der zugeordneten Brennkammer (38) und der zugeordneten Stoßkolbenkammer (20a bis 20h) verschiebbar aufgenommen ist.

25. Verfahren zum Betreiben einer Maschine nach einem der vorhergehenden Ansprüche, wobei das Verfahren folgende Schritte aufweist:
Einbringen einer Menge von komprimiertem Gas in die Stoßkolbenkammer;
Komprimieren des Gases in der Stoßkolbenkammer während einer Kompressionsphase, wenn der Stoßkolben in der Öffnung gleitet, um das Volumen der Brennkammer (38) zu verringern; und
Ausführen einer Verbrennungsphase, welche den Stoßkolben drängt, in der Öffnung zu gleiten, um das Gas in der Stoßkolbenkammer zu komprimieren und die Drehung der Drehnabe (6) zu forcieren.

26. Verfahren nach Anspruch 25, bei dem die Verbrennungsphase die Schritte Injizieren von Kraftstoff in die Brennkammer (38) und Zünden des Kraftstoffs beinhaltet.

27. Verfahren nach Anspruch 25 oder Anspruch 26, mit dem Schritt: Zulassen, dass sich das Gas in der Stoßkolbenkammer sich während einer Expansionsphase ausdehnt, wenn das Volumen zunimmt.

28. Verfahren nach einem der Ansprüche 25 bis 27, mit dem Schritt: Verriegeln des Stoßkolbens in einer fixierten Position während wenigstens eines Teils der Expansionsphase und Lösen des Stoßkolbens beim Start der Kompressionsphase.

29. Verfahren nach Anspruch 28, bei dem der Stoßkolben in der Öffnung zwischen einer radial äußeren Position und einer radial inneren Position gleiten kann, und bei der der Stoßkolben während der Expansionsphase in einer ersten fixierten Position in der radial äußeren Position verriegelt wird und gedrängt wird, während der Kompressionsphase in die radial innere Position zu gleiten, um das Gas in der Brennkammer (38) zu komprimieren.

30. Verfahren nach Anspruch 28 oder Anspruch 29, mit einer Ringkammer (52) zwischen dem Stoßkolben und der Drehnabe (6), und wobei das Verfahren den Schritt aufweist: Zurückhalten einer Gasmenge in der ringförmigen Kammer (52) während wenigstens eines Teils der Expansionsphase, um den Stoßkolben in einer fixierten Position zu verriegeln.

31. Verfahren nach Anspruch 30, mit dem Schritt: Zulassen, dass die Gasmenge in der ringförmigen Kammer (52) die ringförmige Kammer beim Start der Kompressionsphase verlässt, um den Stoßkolben loszulassen.

32. Verfahren nach Anspruch 30 oder Anspruch 31, bei dem wenigstens ein Teil der Gasmenge, welche in der ringförmigen Kammer (52) während der Expansionsphase festgehalten wird, durch eine Verschiebebewegung des Stoßkolbens während der Verbrennungsphase aus der Atmosphäre in die ringförmige Kammer gesaugt wird.

33. Verfahren nach einem der Ansprüche 30 bis 32, bei dem wenigstens ein Teil der Gasmenge, welche in der ringförmigen Kammer (52) gehalten wird, aus einem Nebengasspeicher (50) geliefert wird.

34. Verfahren nach Anspruch 33, bei dem die Gasmenge in der ringförmigen Kammer (52), welche die ringförmige Kammer beim Start der Kompressionsphase verlassen kann, um den Stoßkolben zu entriegeln in den Nebengasspeicher (50) überführt wird.

35. Verfahren nach Anspruch 33 oder 34, bei dem das Gas aus dem Nebengasspeicher (50) in die Brennkammer (38) geliefert wird, um für die Verbrennungsphase ein Verbrennungsgas zu liefern.

36. Verfahren nach einem der Ansprüche 33 bis 35, bei dem Gas aus dem Nebengasspeicher (50) in die Brennkammer (38) geliefert wird, um die Brennkammer von Verbrennungsprodukten zu reinigen, bevor das Gas in der Brennkammer komprimiert wird.

37. Verfahren nach einem der Ansprüche 25 bis 36 mit dem Schritt: Ansaugen von Gas aus der Atmosphäre in die Stoßkolbenkammer (20b) während einer Expansionsphase, wenn das Volumen der Stoßkolbenkammer zunimmt.

38. Verfahren nach Anspruch 37, bei dem das Gas aus der Atmosphäre getrocknet und gefiltert wird.

39. Verfahren nach einem der Ansprüche 25 bis 38, bei dem wenigstens ein Teil des Gases, welches in die Stoßkolbenkammer eingebracht wird, während der Kompressionsphase überführt wird und in einem Hauptgasspeicher (74) gespeichert wird.

40. Verfahren nach Anspruch 39, bei dem das überführte Gas gekühlt wird, bevor es in dem Hauptgasspeicher (74) gespeichert wird.

41. Verfahren nach Anspruch 39 oder Anspruch 40, bei dem das Gas, welches in die Stoßkolbenkammer (20a) eingebracht wird, von dem Hauptgasspeicher (74) geliefert wird.

42. Verfahren nach Anspruch 41, bei dem das Gas, welches von dem Hauptgasspeicher (74) geliefert wird, erhitzt wird, bevor es in die Stoßkolbenkammer (20a) eingebracht wird.

43. Verfahren nach Anspruch 41 oder 42, bei dem die Gasmenge, welche aus dem Hauptgasspeicher (74) in die Stoßkolbenkammer (20a) eingebracht wird, von einem Regelventil (78) bestimmt wird.

44. Verfahren nach Anspruch 43, mit folgenden Schritten:
Betreiben des Regelventils (78) derart, dass eine vorbestimmte Gasmenge aus dem Hauptgasspeicher (74) in die Stoßkolbenkammer (26) eingebracht wird; und
Zulassen, dass die vorbestimmte Gasmenge eine Expansion beginnt, bevor die Verbrennungsphase ausgeführt wird, um den Stoßkolben (12a) zu drängen, in die Öffnung zu gleiten, um das Gas in der Stoßkolbenkammer (20a) weiter zu komprimieren und die Drehung der Drehnabe (6) zu veranlassen.

45. Verfahren zum Betreiben einer Maschine nach einem der Ansprüche 1 bis 24, wobei das Verfahren den Schritt aufweist: Einführen eines kontinuierlichen oder halbkontinuierlichen Stroms von komprimiertem Gas in die Stoßkolbenkammer (20a), um die Drehung der Drehnabe (6) kinetisch zu forcieren.

46. Verfahren zum Betreiben einer Maschine nach Anspruch 24, wobei das Verfahren den Schritt: Verriegeln eines oder mehrerer der Stoßkolben (12a bis 12h) in einer fixierten Position während einer vollständigen Umdrehung der Drehnabe (6).

47. Verfahren nach Anspruch 46, bei dem die Stoßkolben (12a bis 12h) in ihrer zugeordneten Öffnung zwischen einer radial äußeren Position und einer radial inneren Position gleiten können, und bei dem der eine oder die mehreren Stoßkolben (12a bis 12h) während der vollständigen Umdrehung der Drehnabe (6) in einer fixierten Position in der radial äußeren Position verriegelt ist/sind.

48. Verfahren nach Anspruch 46 oder 47, mit dem Schritt: Lösen eines oder mehrerer der Stoßkolben (12a bis 12h) aus der fixierten Position, so dass er/sie in seiner/ihrer zugeordneten Öffnung frei gleiten kann/können.

49. Verfahren nach einem der Ansprüche 46 bis 48, bei dem die Anzahl der Stoßkolben (12a bis 12h), welche in einer fixierten Position gehalten werden und die Anzahl der Stoßkolben, welche frei sind, um in ihrer zugeordneten Öffnung zu gleiten in Bezug auf einen Betriebszustand der Maschine bestimmt werden.

## Revendications

1. Moteur comprenant :
un moyeu rotatif (6) ayant une ouverture définissant une chambre de combustion (38) ;
une chambre de piston à rebond (20a à 20h) dont le volume varie entre un maximum et un minimum avec la rotation du moyeu rotatif (6) ; et
un piston à rebond (12a à 12h) étant un piston flottant ayant une première extrémité qui définit une partie de la chambre de combustion (38) et une seconde extrémité qui définit une partie de la chambre de piston à rebond (20a à 20h) et qui est reçue de manière coulissante dans l'ouverture entre la chambre de combustion (38) et la chambre de piston à rebond (20a à 20h) ;
**caractérisé en ce que** le moyeu rotatif (6) est monté de manière excentrique à l'intérieur d'un boîtier externe (2) ayant une surface interne (4) sensiblement cylindrique et dans lequel la chambre de piston à rebond (20a à 20h) est définie entre une paire de pales (18) qui s'étendent à partir du moyeu rotatif (6) en contact coulissant avec la surface interne (4) du boîtier externe (2).

2. Moteur selon la revendication 1, dans lequel les pales (18) sont reçues de manière coulissante dans des fentes (16) formées dans le boîtier rotatif (6) et sollicitées en contact coulissant avec la surface interne (4) du boîtier (2).

3. Moteur selon l'une quelconque de la revendication 1 ou la revendication 2, dans lequel le piston à rebond (12a à 12h) est un piston à rebond étagé ayant une partie de bague (22) et une partie de jupe (26) de plus grand diamètre.

4. Moteur selon la revendication 3, dans lequel la partie de bague (22) du piston à rebond (12a à 12h) est reçue de manière coulissante dans une partie (24) de l'ouverture ayant un diamètre interne correspondant sensiblement au diamètre externe de la partie de bague (22).

5. Moteur selon la revendication 3 ou la revendication 4, dans lequel la partie de jupe (26) est reçue de manière coulissante dans une partie (28) de l'ouverture ayant un diamètre interne correspondant sensiblement au diamètre externe de la partie de jupe (26) pour définir une chambre annulaire (52) entre le piston à rebond (12a à 12h) et une surface interne ou des surfaces internes de l'ouverture.

6. Moteur selon la revendication 5, comprenant en outre un passage d'entrée (58) à travers lequel le gaz provenant de l'atmosphère peut être alimenté à la chambre annulaire (52) à un moment prédéterminé pendant la rotation du moyeu rotatif (6).

7. Moteur selon la revendication 5 ou la revendication 6, comprenant en outre un réservoir de gaz secondaire (50).

8. Moteur selon la revendication 7, comprenant en outre un passage d'entrée (56) à travers lequel le gaz du réservoir de gaz secondaire (50) peut être alimenté à la chambre annulaire (52) à un moment prédéterminé pendant la rotation du moyeu rotatif (6).

9. Moteur selon la revendication 7 ou la revendication 8, comprenant en outre un passage de sortie (60) à travers lequel le gaz de la chambre annulaire (52) peut être transféré dans le réservoir de gaz secondaire (50) à un moment prédéterminé pendant la rotation du moyeu rotatif (6).

10. Moteur selon l'une quelconque des revendications 7 à 9, comprenant en outre un passage d'entrée (46) à travers lequel le gaz du réservoir de gaz secondaire (50) peut être alimenté à la chambre de combustion (38) à un moment prédéterminé pendant la rotation du moyeu rotatif (6).

11. Moteur selon l'une quelconque des revendications précédentes, comprenant en outre un passage de sortie (48) à travers lequel les produits de combustion dans la chambre de combustion (38) peuvent être évacués à un moment prédéterminé pendant la rotation du moyeu rotatif (6).

12. Moteur selon l'une quelconque des revendications précédentes, comprenant en outre un orifice d'entrée principal (64) à travers lequel le gaz comprimé peut être alimenté à la chambre de piston à rebond (20a) à un moment prédéterminé pendant la rotation du moyeu rotatif (6).

13. Moteur selon la revendication 12, dans lequel l'orifice d'entrée principal (64) comprend une soupape de non retour.

14. Moteur selon la revendication 12 ou la revendication 13, comprenant en outre un orifice de sortie principal (68) à travers lequel le gaz peut être transféré à partir de la chambre de piston à rebond (20h) à un moment prédéterminé pendant la rotation du moyeu rotatif (6).

15. Moteur selon la revendication 14, dans lequel l'orifice de sortie principal (68) comprend une soupape de non retour.

16. Moteur selon la revendication 14 ou la revendication 15, comprenant en outre une boucle d'injection de gaz s'étendant entre l'orifice de sortie principal (68) et l'orifice d'entrée principal (64).

17. Moteur selon la revendication 16, dans lequel la boucle d'injection de gaz comprend une unité de refroidissement (72), un réservoir de gaz principal (74), une soupape de commande (78) et une unité de chauffage (80).

18. Moteur selon l'une quelconque des revendications précédentes, comprenant en outre un orifice d'entrée secondaire (66) à travers lequel le gaz provenant de l'atmosphère peut être absorbé dans la chambre de piston à rebond (20c) à un moment prédéterminé pendant la rotation du moyeu rotatif (6).

19. Moteur selon la revendication 18, dans lequel l'orifice d'entrée secondaire (66) comprend une soupape de non retour.

20. Moteur selon l'une quelconque des revendications précédentes, dans lequel le moyeu rotatif (6) est monté sur des paliers lubrifiés au gaz (8a et 8b).

21. Moteur selon l'une quelconque des revendications précédentes, comprenant en outre des structures de palier au gaz (36) sur une surface externe du piston à rebond (12a à 12h).

22. Moteur selon l'une quelconque des revendications précédentes, comprenant en outre un injecteur de carburant (40) pour injecter du carburant dans la chambre de combustion (38) à un moment prédéterminé pendant la rotation du moyeu rotatif (6).

23. Moteur selon la revendication 22, comprenant en outre un distributeur de carburant (42) pour alimenter le carburant à l'injecteur de carburant (40).

24. Moteur selon l'une quelconque des revendications précédentes, dans lequel le moyeu rotatif (6) comprend une pluralité d'ouvertures, chaque ouverture définissant une chambre de combustion (38) ; une chambre de piston à rebond (20a à 20h) associée à chaque ouverture dont le volume varie entre un maximum et un minimum avec la rotation du moyeu rotatif (6) ; et un piston à rebond (12a à 12h) reçu de manière coulissante dans chaque ouverture entre la chambre de combustion (38) associée et la chambre de piston à rebond (20a à 20h) associée.

25. Procédé pour faire fonctionner un moteur selon l'une quelconque des revendications précédentes, le procédé comprenant les étapes consistant à :
introduire une quantité de gaz comprimé dans la chambre de piston à rebond ;
comprimer le gaz dans la chambre de piston à rebond pendant une phase de compression lorsque le piston à rebond coulisse dans l'ouverture pour diminuer le volume de la chambre de combustion (38) ; et
réaliser une phase de combustion qui force le piston à rebond à coulisser dans l'ouverture pour comprimer le gaz dans la chambre de piston à rebond et forcer la rotation du moyeu rotatif (6).

26. Procédé selon la revendication 25, dans lequel la phase de combustion comprend les étapes consistant à injecter le carburant dans la chambre de combustion (38) et allumer le carburant.

27. Procédé selon la revendication 25 ou la revendication 26, comprenant en outre les étapes consistant à permettre au gaz dans la chambre de piston à rebond de s'expanser pendant une phase d'expansion lorsque le volume augmente.

28. Procédé selon l'une quelconque des revendications 25 à 27, comprenant en outre l'étape consistant à bloquer le piston à rebond dans une position fixe pendant au moins une partie de la phase d'expansion et libérer le piston à rebond au début de la phase de compression.

29. Procédé selon la revendication 28, dans lequel le piston à rebond peut coulisser dans l'ouverture entre une position radialement externe et une position radialement interne et dans lequel le piston à rebond est bloqué dans une position fixe dans la position radialement externe pendant la phase d'expansion et forcé de coulisser dans la position radialement interne pendant la phase de compression pour comprimer le gaz dans la chambre de combustion (38).

30. Procédé selon la revendication 28 ou la revendication 29, comprenant en outre une chambre annulaire (52) entre le piston à rebond et le moyeu rotatif (6) et le procédé comprenant en outre l'étape consistant à retenir une quantité de gaz dans la chambre annulaire (52) pendant au moins une partie de la phase d'expansion pour bloquer le piston à rebond dans une position fixe.

31. Procédé selon la revendication 30, comprenant en outre l'étape consistant à permettre à la quantité de gaz dans la chambre annulaire (52) de quitter la chambre annulaire au début de la phase de compression pour libérer le piston à rebond.

32. Procédé selon la revendication 30 ou la revendication 31, dans lequel au moins une partie de la quantité de gaz retenue dans la chambre annulaire (52) pendant la phase d'expansion est aspirée dans la chambre annulaire depuis l'atmosphère par le mouvement coulissant du piston à rebond pendant la phase de combustion.

33. Procédé selon l'une quelconque des revendications 30 à 32, dans lequel au moins une partie de la quantité de gaz retenue dans la chambre annulaire (52) est alimentée par un réservoir de gaz secondaire (50).

34. Procédé selon la revendication 33, dans lequel la quantité de gaz dans la chambre annulaire (52) qui est autorisée à quitter la chambre annulaire au début de la phase de compression pour débloquer le piston à rebond, est transférée dans le réservoir de gaz secondaire (50).

35. Procédé selon la revendication 33 ou la revendication 34, dans lequel le gaz du réservoir de gaz secondaire (50) est alimenté à la chambre de combustion (38) pour fournir le gaz de combustion pour la phase de combustion.

36. Procédé selon l'une quelconque des revendications 33 à 35, dans lequel le gaz du réservoir de gaz secondaire (50) est alimenté à la chambre de combustion (38) pour purger la chambre de combustion des produits de combustion avant que le gaz dans la chambre de combustion ne soit comprimé.

37. Procédé selon l'une quelconque des revendications 25 à 36, comprenant en outre l'étape consistant à aspirer le gaz dans la chambre de piston à rebond (20b) depuis l'atmosphère pendant une phase d'expansion lorsque le volume de la chambre de piston à rebond augmente.

38. Procédé selon la revendication 37, dans lequel le gaz provenant de l'atmosphère est séché et filtré.

39. Procédé selon l'une quelconque des revendications 25 à 38, dans lequel au moins une partie du gaz introduite dans la chambre de piston de rebond est transférée pendant la phase de compression et stockée dans un réservoir de gaz principal (74).

40. Procédé selon la revendication 39, dans lequel le gaz transféré est refroidi avant d'être stocké dans le réservoir de gaz principal (74).

41. Procédé selon la revendication 39 ou la revendication 40, dans lequel le gaz introduit dans la chambre de piston à rebond (20a) est alimenté depuis le réservoir de gaz principal (74).

42. Procédé selon la revendication 41, dans lequel le gaz alimenté depuis le réservoir de gaz principal (74) est chauffé avant d'être introduit dans la chambre de piston à rebond (20a).

43. Procédé selon la revendication 41 ou la revendication 42, dans lequel la quantité de gaz qui est introduite dans la chambre de piston à rebond (20a) depuis le réservoir de gaz principal (74) est déterminée par une soupape de commande (78).

44. Procédé selon la revendication 43, comprenant en outre les étapes consistant à :
actionner la soupape de commande (78) pour introduire une quantité prédéterminée de gaz dans la chambre de piston à rebond (20a) depuis le réservoir de gaz principal (74) ; et
permettre à la quantité prédéterminée de gaz de commencer l'expansion avant de réaliser la phase de combustion afin de forcer le piston à rebond (12a) à coulisser dans l'ouverture pour comprimer davantage le gaz dans la chambre de piston à rebond (20a) et forcer la rotation du moyeu rotatif (6).

45. Procédé pour faire fonctionner un moteur selon l'une quelconque des revendications 1 à 24, le procédé comprenant l'étape consistant à introduire un courant continu ou semi-continu de gaz comprimé dans la chambre de piston à rebond (20a) pour forcer de manière cinématique la rotation du moyeu rotatif (6).

46. Procédé pour faire fonctionner un moteur selon la revendication 24, le procédé comprenant l'étape consistant à bloquer un ou plusieurs des pistons à rebond (12a à 12h) dans une position fixe pendant une rotation complète du moyeu rotatif (6).

47. Procédé selon la revendication 46, dans lequel les pistons à rebond (12a à 12h) peuvent coulisser dans leur ouverture associée entre une position radialement externe et une position radialement interne et dans lequel les un ou plusieurs pistons à rebond (12a à 12h) sont bloqués dans une position fixe dans la position radialement vers l'extérieur pendant la rotation complète du moyeu rotatif (6).

48. Procédé selon la revendication 46 ou la revendication 47, comprenant en outre l'étape consistant à libérer un ou plusieurs pistons à rebond (12a à 12h) de la position fixe de sorte qu'ils sont libres de coulisser dans leur ouverture associée.

49. Procédé selon l'une quelconque des revendications 46 à 48, dans lequel le nombre de pistons à rebond (12a à 12h) qui sont maintenus dans une position fixe et le nombre de pistons à rebond qui sont libres de coulisser dans leur ouverture associée sont déterminés en référence à une condition de fonctionnement du moteur.
